(19) **Europäisches Patentamt / European Patent Office / Office européen des brevets**

(11) **EP 4 645 982 A1**

(12) **EUROPEAN PATENT APPLICATION**
published in accordance with Art. 153(4) EPC

(43) Date of publication:
05.11.2025 Bulletin 2025/45

(21) Application number: 23948048.6

(22) Date of filing: 10.08.2023

(51) International Patent Classification (IPC):
*H04W 72/0446* (2023.01)

(52) Cooperative Patent Classification (CPC):
H04W 72/0446

(86) International application number:
PCT/CN2023/112197

(87) International publication number:
WO 2025/030473 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: **GUANGDONG OPPO MOBILE
TELECOMMUNICATIONS
CORP., LTD.
Dongguan, Guangdong 523860 (CN)**

(72) Inventor: **ZHANG, Shichang
Dongguan, Guangdong 523860 (CN)**

(74) Representative: **RGTH
Patentanwälte PartGmbB
Neuer Wall 10
20354 Hamburg (DE)**

(54) **SIDELINK TRANSMISSION METHOD AND TERMINAL DEVICE**

(57)    Provided are a sidelink transmission method and a terminal device. The method comprises: a terminal device sends or receives a first sidelink positioning reference signal in a first resource pool, wherein the first resource pool is one of the following: a dedicated resource pool for a sidelink positioning reference signal; and a shared resource pool for a sidelink positioning reference signal and a sidelink data channel.

A terminal device transmits or receives, within a first resource pool, a first SL PRS — S910

FIG. 9

## Description

## TECHNICAL FIELD

This application relates to the field of communications technologies, and more specifically, to a sidelink transmission method and a terminal device.

## BACKGROUND

A sidelink positioning reference signal (sidelink positioning reference signal, SL PRS) may be transmitted within either a dedicated resource pool for an SL PRS or a shared resource pool for both an SL PRS and a sidelink data channel. How to indicate a transmission resource for an SL PRS within the shared resource pool or the dedicated resource pool is a problem to be solved.

## SUMMARY

Embodiments of this application provide a sidelink transmission method and a terminal device. The following describes in detail various aspects involved in embodiments of this application.

According to a first aspect, there is provided a sidelink transmission method. The sidelink transmission method includes: transmitting or receiving, by a terminal device within a first resource pool, a first sidelink positioning reference signal, where the first resource pool is one of following: a dedicated resource pool for a sidelink positioning reference signal; or a shared resource pool for a sidelink positioning reference signal and a sidelink data channel.

According to a second aspect, there is provided a terminal device. The terminal device includes: a communications module, configured to transmit or receive, within a first resource pool, a first sidelink positioning reference signal, where the first resource pool is one of following: a dedicated resource pool for a sidelink positioning reference signal; or a shared resource pool for a sidelink positioning reference signal and a sidelink data channel.

According to a third aspect, a terminal device is provided, and the terminal device includes a transceiver, a memory, and a processor. The memory is configured to store a program, and the processor is configured to: invoke a program in the memory, and control the transceiver to receive or transmit a signal, to cause a terminal device to execute the method according to the first aspect.

According to a fourth aspect, an apparatus is provided. The apparatus includes a processor, configured to invoke a program from a memory to cause the apparatus to execute the method according to the first aspect.

According to a fifth aspect, a chip is provided. The chip includes a processor configured to invoke a program from a memory to cause a device on which the chip is installed to execute the method according to the first aspect.

According to a sixth aspect, a computer-readable storage medium is provided, and the computer-readable storage medium stores a program that causes a computer to execute the method according to the first aspect.

According to a seventh aspect, a computer program product is provided, and the computer program product includes a program that causes a computer to execute the method according to the first aspect.

According to an eighth aspect, a computer program is provided, where the computer program causes a computer to execute the method according to the first aspect.

## BRIEF DESCRIPTION OF DRAWINGS

FIG. 1 is an example diagram of a system architecture of a wireless communications system to which embodiments of this application are applicable.
FIG. 2 is an example diagram of a resource pool for physical sidelink control channels (physical sidelink control channel, PSCCH) and physical sidelink control channels (physical sidelink control channel, PSSCH).
FIG. 3 is a schematic diagram of a slot structure in a new radio (new radio, NR) system.
FIG. 4 is an example diagram of a resource selection process in a second resource selection mode.
FIG. 5 is an example diagram of resources for transmitting a downlink positioning reference signal (downlink positioning reference signal, DL PRS).
FIG. 6 is a schematic structural diagram of an interlaced resource block.
FIG. 7 is an example diagram of a frame structure for a sidelink over unlicensed spectrum (sidelink over unlicensed spectrum, SL-U) system.
FIG. 8 is an example diagram of resource block (resource block, RB) sets.
FIG. 9 is a schematic flowchart of a sidelink transmission method according to an embodiment of this application.
FIG. 10 is an example diagram of association relationships between PSCCH resources and SL PRS resources according to an embodiment of this application.
FIG. 11 is an example diagram of association relationships between PSCCH resources and SL PRS resources according to another embodiment of this application.
FIG. 12 is an example diagram of association relationships between PSCCH resources and SL PRS resources according to still another embodiment of this application.

FIG. 13 is a schematic structural diagram of a terminal device according to an embodiment of this application.

FIG. 14 is a schematic structural diagram of an apparatus according to an embodiment of this application.

## DESCRIPTION OF EMBODIMENTS

Technical solutions in this application are described below with reference to the accompanying drawings.

## Communications system architecture

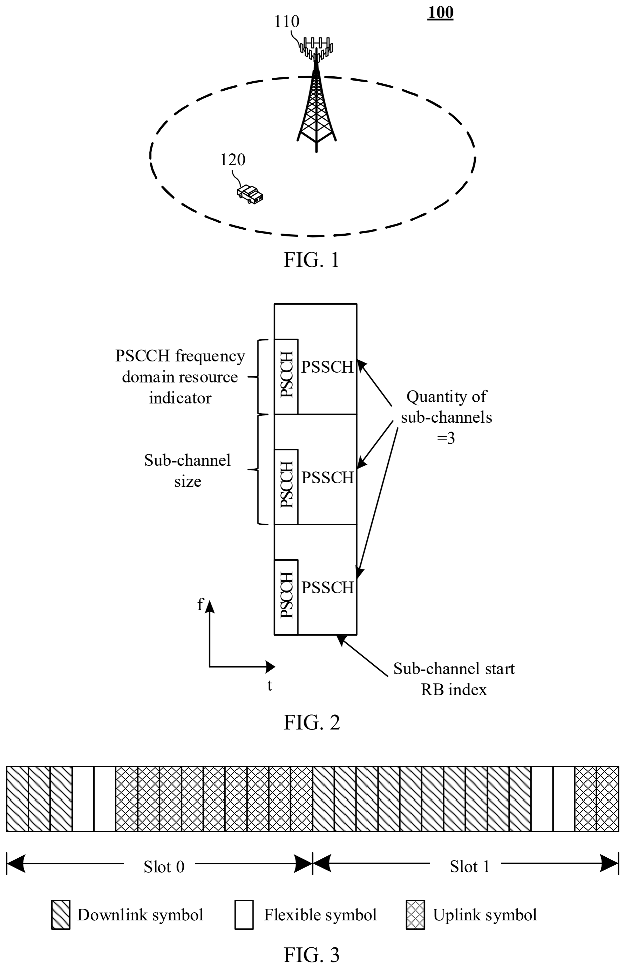

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide communication coverage for a specific geographic area, and may communicate with a terminal device 120 within the coverage.

FIG. 1 shows one network device and one terminal device as an example. Optionally, the wireless communications system 100 may include one or more network devices 110, and/or one or more terminal devices 120. For a network device 110, the one or more terminal devices 120 may be located within network coverage of the network device 110, or may be located outside network coverage of the network device 110, or may be located partially within the network coverage of the network device 110, and may be located partially outside the network coverage of the network device 110, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. A cellular phone and a smart home device communicate with each other, without relaying a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (baseband unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, vehicle-to-everything (vehicle-to-everything, V2X), and machine-to-machine (machine-to-machine, M2M) communications, a network-side device in a 6G network, a device that functions as a base station in a future communications system, or the like. The base station may support networks of a same access technology or different access technologies. A specific technology and a specific device used by the network device are not limited in embodiments of this application.

The base station may be stationary or mobile. For example, a helicopter or an unmanned aerial vehicle may be configured to act as a mobile base station, and one or more cells may move based on a position of the mobile base station. In another example, a helicopter or an unmanned aerial vehicle may be configured to serve as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

## Determining of an NR-V2X frequency domain resource

As in LTE-V2X, frequency domain resources within an NR-V2X resource pool may be contiguous, and an allocation granularity of the frequency domain resources may be a sub-channel. Generally, a quantity of physical resource blocks (physical resource block, PRB) included in one sub-channel is {10, 12, 15, 20, 50, 75, 100}, where a size of a smallest sub-channel is 10 PRBs, that is, far greater than a size of a smallest sub-channel in LTE-V2X: 4 PRBs. This is mainly because a frequency domain resource of a PSCCH in NR-V2X is located in the first sub-channel of a PSSCH associated with the PSCCH, a frequency domain resource of the PSCCH is less than or equal to a size of a sub-channel of the PSSCH, and a time domain resource of the PSCCH occupies two or three orthogonal frequency division multiplexing (orthogonal frequency division multiplexing, OFDM) symbols. If a configured size of the sub-channel is relatively small, there may be very few available resources for the PSCCH, resulting in increasing of a bit error rate, and degrading of detection performance of the PSCCH. In NR-V2X, a size of a sub-channel of a PSSCH and a size of a frequency domain resource of a PSCCH are independently configured. The size of the frequency domain resource of the PSCCH is generally less than or equal to the size of the sub-channel of the PSSCH.

In some implementations, the following configuration parameters in NR-V2X resource pool configuration information are used to determine frequency domain resources within a resource pool for a PSCCH and a PSSCH: a sub-channel size (sl-SubchannelSize), a sub-channel quantity (sl-NumSubchannel), a sub-channel start resource block (resource block, RB) index (sl-StartRB-Subchannel), a PRB quantity (sl-RB-Number), and a PSCCH frequency domain resource indicator (sl-FreqResourcePSCCH).

The foregoing sub-channel size may indicate a quantity of consecutive PRBs included in one sub-channel in a resource pool. A value of the sub-channel size may be {10, 12, 15, 20, 50, 75, 100} PRBs.

The foregoing sub-channel quantity may indicate a quantity of sub-channels included in a resource pool.

The foregoing sub-channel start RB index may indicate a start PRB index of the first sub-channel in a resource pool.

The foregoing PRB quantity may indicate a quantity of consecutive PRBs included in a resource pool.

The foregoing PSCCH frequency domain resource indicator may indicate a size of a frequency domain resource of a PSCCH. Generally, a value of the PSCCH frequency domain resource indicator is {10, 12, 15, 20, 25} PRBs.

In some implementations, when a terminal device determines a resource pool used for PSSCH transmission or reception, a frequency domain resource included in the resource pool may be sl-NumSubchannel consecutive sub-channels starting from a PRB indicated by sl-StartRB-Subchannel. If a quantity of PRBs included in the sl-NumSubchannel consecutive sub-channels is less than the PRB quantity indicated by sl-RB-Number, remaining PRBs cannot be used for PSSCH transmission or reception.

In NR-V2X, a frequency domain start location of a PSCCH may be aligned with a frequency domain start location of the first sub-channel of a PSSCH associated with the PSCCH. Therefore, a start location of each sub-channel of the PSSCH is a possible frequency domain start location of the PSCCH. Frequency domain ranges of the resource pool for the PSCCH and the PSSCH may be determined based on the foregoing parameters. FIG. 2 is a schematic diagram of a resource pool for a PSCCH and a PSSCH.

Usually, the PSCCH is used to carry sidelink control information related to resource listening. In some implementations, information carried on the PSCCH may include one or more of the following: a priority of scheduled transmission, frequency domain resource allocation, time domain resource allocation, a reference signal pattern of the PSSCH, a second-stage sidelink control information (sidelink control information, SCI) format, a second-stage SCI bit rate offset, a quantity of PSSCH demodulation reference signal (demodulation reference signal, DMRS) ports, a modulation and coding scheme (modulation and coding scheme, MCS), an MCS table indicator, a quantity of physical sidelink feedback channel (physical sidelink feedback channel, PSFCH) symbols, a resource reservation period, a reserved bit, or the like.

Frequency domain resource allocation is used to indicate a quantity of frequency domain resources of a PSSCH within a current slot scheduled by using a PSCCH, and a quantity and a start location of frequency domain resources of at most two reserved retransmission resources.

Time domain resource allocation is used to indicate time domain locations of at most two retransmission resources.

The resource reservation period is used to reserve a resource used for transmitting another transport block (transport block, TB) in a next period. Usually, this information bit field does not exist when inter-TB resource reservation is not activated in a resource pool configuration.

A quantity of reserved bits, usually two bits to four bits, may be configured by a network or pre-configured.

Because the PSCCH and the scheduled PSSCH are transmitted in one slot, and a start location of a PRB occupied by the PSCCH may be a start location of the first sub-channel of the scheduled PSSCH, a start location of the scheduled PSSCH in time-frequency domain is not explicitly indicated in the foregoing PSCCH (that is, an SCI format 1-A).

## Determining of an NR-V2X time domain resource (slot)

**In** NR-V2X, PSCCH/PSSCH transmission is generally performed on a slot basis. In other words, only one PSCCH/PSSCH can be transmitted in one slot, and transmission of a plurality of PSCCHs/PSSCHs in a time-division multiplexing (time-division multiplexing, TDM) manner in one slot is not supported. In addition, PSCCHs/PSSCHs of different users may be multiplexed in a frequency division multiplexing (frequency division multiplexing, FDM) manner in one slot.

A time domain resource of a PSSCH in NR-V2X may be at a granularity of a slot. However, in contrast to a PSSCH in LTE-V2X, which occupies all time domain symbols in one subframe, a PSSCH in NR-V2X may occupy some symbols in a slot. This is mainly because in an LTE system, uplink or downlink transmission is at a granularity of a subframe. Therefore, sidelink transmission is also at a granularity of a subframe (a special subframe in a TDD system is not used for sidelink transmission). In an NR system, a flexible slot structure is used. To be specific, one slot includes both an uplink symbol and a downlink symbol, so that more flexible scheduling can be implemented and a delay can be reduced.

FIG. 3 is a schematic diagram of a slot structure in an NR system. With reference to FIG. 3, a slot may include a downlink (downlink, DL) symbol, an uplink (uplink, UL) symbol, and a flexible (flexible) symbol. The downlink symbol may be located at a start location of the slot, the uplink symbol may be located at an end location of the slot, and the flexible symbol is located between the downlink symbol and the uplink symbol. In addition, a quantity of symbols in each slot is configurable.

Currently, a carrier may be shared between a sidelink transmission system and a cellular system. In this case, sidelink transmission can only be performed using an uplink transmission resource of the cellular system. For NR-V2X, if it is still necessary to occupy all time domain symbols within one slot for sidelink transmission, a network is required to configure all uplink symbols in a slot for sidelink transmission. In this way, uplink and downlink data transmission in the NR system is greatly affected, and system performance is degraded. Therefore, in NR-V2X, it is supported that some time domain symbols in a slot are used for sidelink transmission, that is, some uplink symbols in one slot are used for sidelink transmission. In addition, an automatic gain control (automatic gain control, AGC) symbol and a guard period (guard period, GP) symbol are included in sidelink transmission. In consideration of this, if there is a relatively small quantity of uplink symbols that can be used for sidelink transmission, fewer symbols remain available for transmitting valid data after the AGC symbol and the GP symbol are excluded, resulting in a very low resource utilization. Therefore, at least seven time domain symbols (including a GP symbol) are occupied for sidelink transmission in NR-V2X. When the sidelink transmission system uses a dedicated carrier, a problem of sharing a transmission resource with another system does not exist, and all the symbols in the slot may be configured to be used for sidelink transmission.

In NR-V2X, a start point and a length of time domain symbols used for sidelink transmission in a slot may be configured by using parameters: a starting symbol location (sl-StartSymbol) and a symbol quantity (sl-LengthSymbols). The last symbol in the time domain symbols used for sidelink transmission is used as a guard period GP. Only time domain symbols other than the GP can be used for a PSSCH and a PSCCH. However, if a PSFCH transmission resource is configured within a slot, the PSSCH and the PSCCH cannot occupy a time domain symbol used for PSFCH transmission, nor an AGC symbol and a GP symbol before the time domain symbol.

In an NR-V2X system, a time domain resource in a resource pool is indicated by using a bitmap. In consideration of a flexible slot structure in the NR system, a length of the bitmap is extended, and a length range of the bitmap is [10:160]. A manner of determining, by using a bitmap, a location of a slot belonging to a resource pool in one system frame number (system frame number, SFN) period in NR-V2X is similar to that in LTE-V2X, and the two manners differ from each other in the following two aspects.

First, a total quantity of slots included in one SFN period is $10240 \times 2^{\mu}$, where a parameter $\mu$ is related to a value of a subcarrier spacing.

Second, if at least one time domain symbol in time domain symbols $Y, Y+1, Y+2, ..., Y+X-1$ included in one slot is not configured as an uplink symbol by using *TDD-UL-DL-ConfigCommon* signalling from the network device, the slot cannot be used for sidelink transmission. Herein, $Y$ and $X$ respectively represent *sl-StartSymbol* and *sl-LengthSymbols.*

A method for determining a location of a slot belonging to a resource pool in one SFN period may include the following step 1 to step 5.

In step 1, a slot that does not belong to the resource pool in the SFN period is removed. The slot that does not belong to the resource pool may include a synchronization slot, a slot that cannot be used for sidelink transmission, and the like. Remaining slots are expressed as a remaining slot set, and the remaining slots are renumbered as $(l_0, l_1, \cdots, l_{(10240 \times 2^{\mu} - N_{S\_SSB} - N_{nonSL-1})})$.

Herein, $N_{S\_SSB}$ denotes a quantity of synchronization slots within one SFN period, and the synchronization slot is determined based on synchronization-related configuration parameters, which are related to a synchronization signal block (synchronization signal block, SSB) transmission period, a quantity of SSB transmission resources configured within the period, and the like.

$N_{nonSL}$ denotes a quantity of slots within one SFN period that do not conform to a configuration of a starting point and a quantity of uplink symbols. If at least one time domain symbol in the time domain symbols $Y, Y+1, Y+2, ..., Y+X-1$ included in one slot is not semi-statically configured as an uplink symbol, the slot cannot be used for sidelink transmission, where $Y$ and $X$ respectively represent *sl-StartSymbol* and *sl-LengthSymbols.*

In step 2, a quantity of reserved slots and a corresponding time domain location are determined.

If a quantity of slots in the remaining slot set cannot be exactly divided by a bitmap length, a quantity of reserved slots and a corresponding time domain location are required to be determined. In some implementations, if a slot $l_r$ ($0 \le r < 10240 \times 2^{\mu} - N_{S\_SSB} - N_{nonsL}$) satisfies

$$r = \left\lfloor \frac{m \cdot (10240 \times 2^{\mu} - N_{S\_SSB} - N_{nonSL})}{N_{reserved}} \right\rfloor$$ , the slot is a reserved slot.

In which, $N_{reserved} = (10240 \times 2^{\mu} - N_{S\_SSB} - N_{nonSL}) \bmod L_{bitmap}$, and represents a quantity of reserved slots, $L_{bitmap}$ represents the length of the bitmap, and m = 0, ... , $N_{reserved}$ - 1.

In step 3, the reserved slots are removed from the remaining slot set, to obtain a set referred to as a logical slot set.

All the slots in the foregoing slot set are slots that can be used for a resource pool. The slots in the logical slot set are renumbered as $\left( t_0^{SL}, t_1^{SL}, \ldots, t_{Tmax-1}^{SL} \right)$ , where $T_{max} = 10240 \times 2^{\mu}$ - $N_{S\_SSB}$ - $N_{nonSL}$ - $N_{reserved}$.

In step 4, based on the bitmap, a slot that is in the logical slot set and that belongs to the resource pool is determined.

A bitmap in resource pool configuration information is $(b_{=0}, b_1, ... , b_{L_{bitmap-1}})$. For a slot $t_k^{SL}$ ($0 \le k < (10240 \times 2^{\mu} - N_{S\_SSB} - N_{nonSL} - N_{reserved})$) in the logical slot set, when $b_{k'} = 1$ is satisfied, the slot is a slot belonging to the resource pool, where $k' = k \bmod L_{bitmap}$.

In step 5, the slot that is determined in step 4 and that belongs to the resource pool is renumbered as $t'^{SL}_i$, where $i \in \{0, 1, ..., $ and $T'_{max}$ - 1\}, and $T'_{max}$ represents a quantity of slots included in the resource pool.

## Second resource selection mode in NR SL:

The second resource selection mode may also be referred to as a resource allocation mode 2. In the resource allocation mode 2, a higher layer of a terminal device may request a physical layer of the terminal device to determine a resource subset. Then, the higher layer of the terminal device may select, from the resource subset determined by the physical layer, a resource used for PSSCH/PSCCH transmission.

If it is expected to trigger the foregoing resource selection process, the higher layer of the terminal device may provide, within a slot n, the physical layer with the following parameters related to PSSCH/PSCCH transmission: a resource pool corresponding to the resource subset; a physical layer priority ($prio_{TX}$); a remaining packet delay budget (remaining packet delay budget, remaining PDB); and a quantity ($L_{subCH}$) of sub-channels used for PSSCH/PSCCH transmission within one slot.

Optionally, the higher layer of the terminal device may further provide the physical layer with a resource reservation period ($P_{rsvp\_TX}$). The unit of the resource reservation period is generally milliseconds (ms).

The process of determining the resource subset may be affected by the following parameters configured by the higher layer: sl-SelectionWindowList, sl-ThresPSSCH-RSRP-List, sl-RS-ForSensing, sl-ResourceReservePeriodList, sl-SensingWindow, sl-TxPercentageList, and sl-PreemptionEnable.

sl-SelectionWindowList in the foregoing parameters may be used to configure a minimum value of $T_{2min}$ for different $prio_{TX}$ values. $T_{2min}$ may be set to a value configured by sl-SelectionWindowList for $prio_{TX}$.

sl-ThresPSSCH-RSRP-List in the foregoing parameters may be used to configure a reference signal received power (reference signal receiving power, RSRP) threshold corresponding to each ($p_i$, $p_j$) combination, where $p_i$ denotes a priority indicated in received SCI, and $p_j = prio_{TX}$.

sl-RS-ForSensing in the foregoing parameters may be used to instruct the terminal device to perform resource exclusion based on a PSSCH-RSRP or PSCCH-RSRP measurement result.

sl-ResourceReservePeriodList in the foregoing parameters may be used to indicate an available resource reservation period within the resource pool.

sl-SensingWindow in the foregoing parameters may be used to indicate a starting point $T_0$ of a resource listening window. $T_0$ may be defined as a quantity of slots corresponding to sl-SensingWindow (in milliseconds).

sl-TxPercentageList in the foregoing parameters may be used to configure a proportion $X$ of remaining resources obtained after the resource exclusion. For $prio_{TX}$, $X$ may be defined as sl-TxPercentageList ($prio_{TX}$).

sl-PreemptionEnable in the foregoing parameters may be used to indicate whether resource preemption (pre-emption) is activated within the resource pool, and a value of a resource preemption priority $prio_{pre}$ in a case in which resource preemption is activated.

If the higher layer of the terminal device provides a resource reservation period $P_{rsvp\_TX}$, $P_{rsvp\_TX}$ may be converted into a quantity $P'_{rsvp\_TX}$ of logical slots.

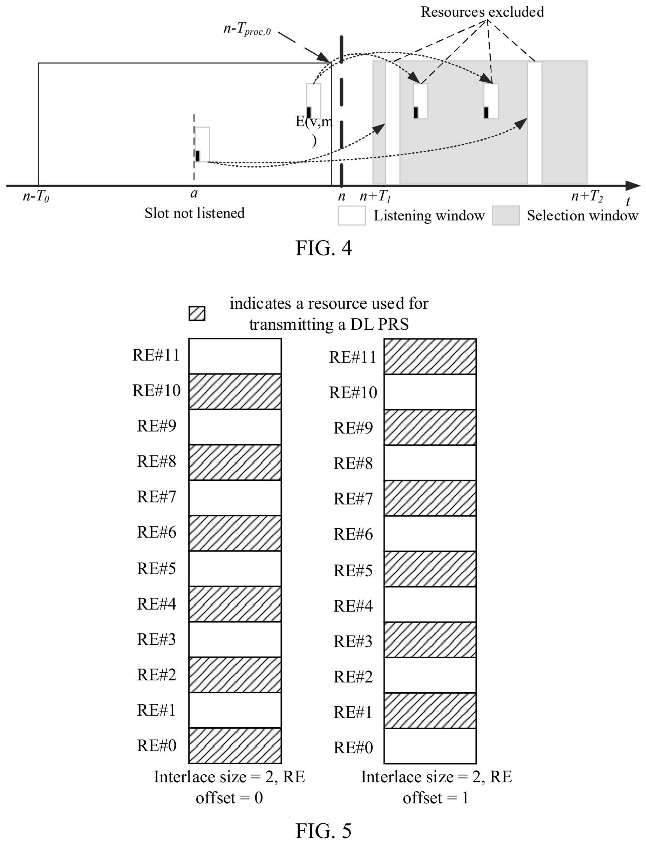

As shown in FIG. 4, a process of determining the resource subset by the physical layer of the terminal device may include step (1) to step (7) below.

In step (1), a candidate single-slot resource $R_{x,y}$ used for transmission may be defined as consecutive $L_{subCH}$ sub-channels within a slot $t'^{SL}_y$. Indexes of the sub-channels are x+j, j = 0,..., $L_{subCH}$ - 1. The terminal device assumes that any $L_{subCH}$ consecutive sub-channels within a time range [$n + T_1$, $n + T_2$] correspond to one single slot resource.

$T_1$ in the foregoing time range may satisfy $0 \leq T_1 \leq T_{proc,1}$, and a value of $T_1$ may be determined by implementation of the terminal device. When a subcarrier spacing is 15 kHz, 30 kHz, 60 kHz, or 120 kHz, a value of $T_{proc,1}$ is 3 slots, 5 slots, 9 slots, or 17 slots.

If $T_{2min}$ is less than a remaining packet delay budget of a data packet in the unit of slots, $T_{2min} \leq T_2 \leq PDB$, and a value of $T_2$ may be determined by implementation of the terminal device. Otherwise, $T_2$ is equal to PDB. The PDB may be indicated by the higher layer of the terminal device. A value set of $T_{2min}$ may be {1, 5, 10, 20} $\times 2^\mu$ slots, where $\mu$ = 0, 1, 2, 3 correspond to cases in which the subcarrier spacing is 15 kHz, 30 kHz, 60 kHz, and 120 kHz, respectively. The terminal device may determine $T_{2min}$ from the value set based on a priority $prio_{TX}$ of data to be transmitted by the terminal device.

A total quantity of candidate single-slot resources is $M_{total}$.

In step (2), a resource listening window is defined as slots within a range of

$$[n - T_0, n - T^{SL}_{proc,0})$$

, where for a definition of $T_0$, reference is made to the foregoing description. When the subcarrier spacing is 15 kHz, 30 kHz, 60 kHz, or 120 kHz, $T_{proc,0}$ is one slot, one slot, two slots, or four slots. The terminal device should listen to a slot that is within the resource listening window and that belongs to a sidelink resource pool, unless the terminal device performs a transmission operation within a slot.

In step (3), the parameter $Th(p_i, p_j)$ is set to an $i$th value configured by sl-ThresPSSCH-RSRP-List, where $i = p_i + (p_j - 1) * 8$.

In step (4), the set $S_A$ is initialized to all candidate single-slot resources.

In step (5), if the following conditions are met, the terminal device should exclude a candidate resource $R_{x,y}$ from $S_A$.

Condition 1: The terminal device does not listen to a slot $t'^{SL}_m$ in step (2).

Condition 2: For a quantity $P$ of logical slots corresponding to any one resource reservation period allowed within a resource pool configured by sl-ResourceReservePeriodList, y=m+P.

In step (6), if the following conditions are met, the terminal device should exclude a candidate resource $R_{x,y}$ from $S_A$.

Condition 1: The terminal device receives an SCI format 1-A in a slot $t'^{SL}_m$, where a 'Resource reservation period' field (if any) and a 'Priority' field respectively indicate $P_{rsvp\_RX}$ and $prio_{RX}$.

Condition 2: RSRP measured for received SCI is higher than $Th(prio_{RX}, prio_{TX})$.

Condition 3: When a PSSCH resource reserved and indicated in an SCI format I-A received in a slot $t'^{SL}_m$ overlaps with $R_{x,y+j \times P'_{rsvp\_TX}}$, or an SCI format 1-A received includes a 'Resource reservation period' field, it is assumed that a resource reserved and indicated in SCI of a same format received in a slot $t^{SL}_{m+q \times P'_{rsvp\_RX}}$ overlaps with $R_{x,y+j \times P'_{rsvp\_TX}}$, where, q = 1, 2, ..., Q, and j = 0, 1, ..., $C_{resel}$ - 1. Herein, $P'_{rsvp\_RX}$ denotes a quantity of logical slots converted from $P_{rsvp\_RX}$. If $P_{rsvp}$-

$$_{RX} \quad < \quad T_{scal}, \qquad n' - m \leq P'_{rsvp\_RX} \quad, \quad \text{and}$$

$$Q = \left\lceil \frac{T_{scal}}{P_{rsvp\_RX}} \right\rceil \text{, where if a slot n belongs to a set}$$

$(t'^{SL}_0, t'^{SL}_1, t'^{SL}_2, ...)$, $t^{SL}_{n'} = n$; otherwise, $t^{SL}_{n'}$

denotes a first slot, after the slot n, that belongs to

$(t'^{SL}_0, t'^{SL}_1, t'^{SL}_2, ...)$; otherwise, $Q = 1$. $T_{scal}$ denotes a value in the unit of milliseconds converted from $T_2$. $C_{resel}$ denotes a quantity of PSSCH transmission opportunities to be selected. $(t'^{SL}_0, t'^{SL}_1, t'^{SL}_2, ...)$ denotes a set of logical slots included within a current resource pool.

In step (7), if a quantity of remaining single-slot resources in the set $S_A$ is less than $X \cdot M_{total}$, the terminal device increases a value of $Th(p_i, p_j)$ by 3 dB, and performs step (4).

The physical layer of the terminal device reports $S_A$ to a MAC layer.

**Downlink-based positioning**

In downlink-based positioning, parameter configuration for a downlink positioning reference signal (downlink positioning reference signal, DL PRS) may include four levels from high to low: positioning frequency layer (frequency layer), TRP layer, PRS resource set, and PRS resource. Parameter configuration for a DL PRS is described in detail below.

A network device may provide a terminal device with DL PRS configurations for four positioning frequency layers. The following DL PRS configuration parameters are provided in a parameter structure of each positioning frequency layer: a subcarrier spacing of a DL PRS; a cyclic prefix (cyclic prefix, CP) length of a DL PRS; a frequency domain resource bandwidth of a DL PRS; a frequency domain start frequency position of a DL PRS resource; a frequency domain reference point "Point A" of a DL PRS; and an interlace size "Comb-N" of a DL PRS.

A value of a frequency domain resource bandwidth of the DL PRS may be a quantity of PRBs allocated to the DL PRS. In some cases, a minimum value of the frequency domain resource bandwidth of the DL PRS may be 24 PRBs, with a granularity of 4 PRBs. A maximum value of the frequency domain resource bandwidth of the DL PRS may be 272 PRBs.

The frequency domain start frequency position of the DL PRS resource is used to indicate an index number of a start PRB of the DL PRS in frequency domain resource allocation. An index number of a PRB is defined relative to the frequency domain reference point "Point A" of the DL PRS.

The foregoing DL PRS configuration parameters corresponding to each positioning frequency layer may be applied to all DL PRS resources included in the positioning frequency layer. That is, in a positioning frequency layer, all DL PRSs from a plurality of different TRPs can use a same subcarrier spacing and CP length and a same interlace size, be transmitted on a same frequency subband, and occupy a same bandwidth. Such a configuration may allow the terminal device to simultaneously receive and measure DL PRSs from a plurality of different TRPs on a same frequency.

In some scenarios, the parameters of the TRP layer may include a parameter for uniquely identifying and locating an ID of a TRP, such as a physical cell ID of the TRP, an NR cell global identifier (NCGI) of the TRP, or an absolute radio frequency channel number (absolute radio frequency channel number, ARFCN) of the TRP. Usually, a maximum of two DL PRS resource sets may be configured in each TRP layer.

Configuration parameters of each DL PRS resource set may be applied to all DL PRS resources included in the DL PRS resource set. Configuration parameters of a DL PRS resource set include one or more of the following parameters: a DL PRS resource set identity ID (represented by "nr-DL-PRS-ResourceSetID"); a transmission period and slot offset of a DL PRS (represented by "dl-PRS-Periodicity-and-ResourceSetSlotOffset"); a repetition factor of a DL PRS resource (represented by "dl-PRS-ResourceRepetitionFactor"); a time interval for repeated transmissions of a DL PRS resource (represented by "dl-PRS-ResourceTimeGap"); a DL PRS muting (muting) configuration; and a quantity of OFDM symbols occupied by the DL PRS resource (represented by "dl-PRS-NumSymbols").

The transmission period and slot offset of a DL PRS are used for indicating time domain transmission behavior of all DL PRS resources in the DL PRS resource set. In some implementations, a minimum value of a configurable DL PRS transmission period is 4 milliseconds, and a maximum value of a configurable DL PRS transmission period is 10,240 milliseconds. Currently, configuration of a DL PRS supports flexible subcarrier spacings: including 15 KHz, 30 KHz, 60 KHz, and 120 KHz. In the case of different subcarrier spacings, the configurable DL PRS transmission period may have a same value range. FIG. 5 is a schematic diagram showing resources for transmitting a DL PRS in a case that the interlace size is 2 and resource elememt (resource element, RE) offsets are 0 and 1, respectively.

A repetition factor of the DL PRS resource is used to indicate a quantity of repeated transmission of a DL PRS resource in each DL PRS transmission period. Currently, repeated transmission of a same DL PRS resource may be used by the terminal device to aggregate DL PRS energy of a plurality of transmissions, which facilitates increasing a coverage distance of a DL PRS and improving positioning precision. In an FR2 system, repeated transmission of the DL PRS resource may also be used by the terminal device to perform receive beam sweeping operations. The terminal device may use different receive beams to receive repeated transmission of a same DL PRS resource, so as to find an optimal TRP transmit beam matching the receive beam of the terminal device. However, repeated transmission of the DL PRS resource increase DL PRS transmission overheads. Currently, in order to control the transmission overheads, the repetition factor of the DL PRS resource is set to 1, 2, 4, 6, 8, 16, or 32 in the 3GPP NR R16 specification.

A time interval between repeated transmission of the DL PRS resource is used to indicate a quantity of slots between two consecutive repeated transmission of a same DL PRS resource.

The DL PRS muting configuration is used to indicate that no DL PRS is transmitted on some allocated time-frequency resources. The muting configuration may be understood as follows: a DL PRS is not transmitted on all allocated time-frequency resources, and is intentionally not transmitted on some designated time-frequency resources. The muting configuration may avoid a conflict between a DL PRS and another signal (such as an SSB). Further, the muting configuration may avoid interference between signals transmitted by different TRPs. For example, the muting configuration may be used to instruct a TRP that is closer to the terminal device not to transmit a DL PRS, and instruct a TRP that is farther away from the terminal device to transmit a DL PRS. In this way, the terminal device may not be interfered with by a TRP indicating muting, and receives a DL PRS from the farther TRP.

A quantity of OFDM symbols occupied by the DL PRS resource is used to indicate a quantity of OFDM symbols allocated to one DL PRS resource in one slot.

Generally, DL PRS configuration parameters included in the parameters of the TRP layer may be applied to all DL PRS resources in a DL PRS resource set corresponding to the TRP layer. Therefore, within DL PRS resources belonging to a same DL PRS resource set, DL PRSs are transmitted in a same transmission period and transmitted repeatedly for a same number of times, and the DL PRSs occupy a same quantity of OFDM symbols.

In some implementations, for each DL PRS resource, the DL PRS configuration parameters may further include: a DL PRS resource identity ID (represented by "nr-DL-PRS-ResourceID"); a DL PRS sequence ID (represented by "dl-PRS-SequenceID"); a start frequency domain resource unit offset of a DL PRS (represented by "dl-PRS-CombSizeN-AndReOffset"); a DL PRS resource slot offset (represented by "dl-PRS-ResourceSlotOffset"); a DL PRS OFDM symbol offset (represented by "dl-PRS-ResourceSymbolOffset"); and DL PRS quasi co-location (quasi co-location, QCL) information (represented by "dl-PRS-QCL-Info").

The start frequency domain resource unit offset of a DL PRS is used to indicate a frequency domain resource unit offset value used for resource mapping on the 1st allocated OFDM symbol of the DL PRS resource in one slot. Generally, based on this parameter and a relative offset value defined in TS 38.211, the terminal device may determine, for each OFDM symbol, a frequency domain resource unit offset value used for resource mapping on the respective OFDM symbol.

The DL PRS resource slot offset is used to indicate a slot offset relative to a DL PRS resource set. This parameter may be used to determine a slot position of a respective DL PRS resource.

The DL PRS OFDM symbol offset is used to indicate a time-frequency resource allocation position of a DL PRS resource in one slot. This parameter may be used to indicate an index number of a starting OFDM symbol in a slot.

The DL PRS QCL information is used to indicate QCL information of a DL PRS.

**SL-U**

When sidelink transmission is performed in unlicensed spectrum, the sidelink transmission is required to meet specific regulatory requirements, including a minimum occupied channel bandwidth (occupied channel bandwidth, OCB) and a maximum power spectral density (power spectral density, PSD). For the OCB requirement, when a UE performs data transmission by using this channel, an occupied channel bandwidth should be not less than 80% of a channel bandwidth. For the maximum power spectral density requirement, transmit power of the UE per 1 MHz should not exceed 10 dBm. To meet OCB and PSD regulatory requirements, an interlaced resource block (interlaced resource block, IRB) structure is required to be used for sidelink transmission in unlicensed spectrum. One IRB includes N RBs that are discrete in frequency domain, a total of M IRBs are included in a frequency band range, and RBs included in the $m^{th}$ IRB are {m, M+m, 2M+m, 3M+m, ...}.

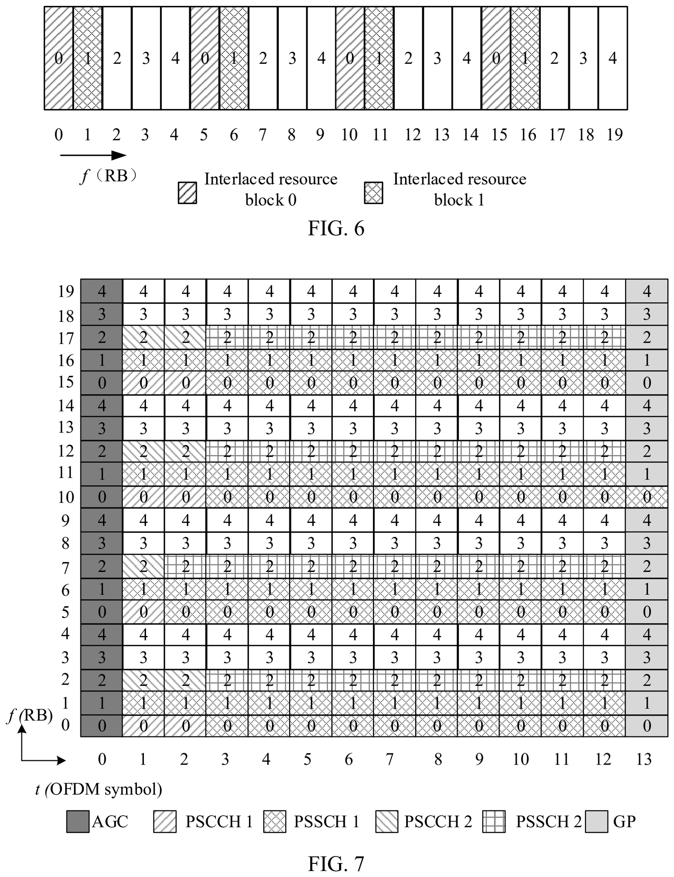

FIG. 6 is a schematic structural diagram of interlaced resource blocks. As shown in FIG. 6, a system bandwidth includes 20 RBs, including 5 IRBs (that is, M = 5), each IRB includes 4 RBs (that is, N = 4), and any two adjacent RBs belonging to a same IRB are spaced by a same frequency domain spacing, that is, 5 RBs. The numbers in boxes in FIG. 6 represent IRB indexes.

In an SL-U system, if an IRB-based resource allocation granularity is used, channels such as a PSCCH and a PSSCH in the SL-U system are all based on an IRB structure. FIG. 7 is an example diagram of a frame structure for an SL-U system, where the frame structure in FIG. 7 shows that a slot includes only a PSCCH and a PSSCH and includes no PSFCH. As shown in FIG. 7, a bandwidth includes 20 RBs, with 5 IRB resources being configured, that is, M = 5, each IRB resource includes 4 RBs, and the numbers in boxes represent IRB indexes. In FIG. 7, the system configures the PSCCH to occupy one IRB resource and two OFDM symbols in time domain. The PSSCH is at a granularity of a PSSCH. The 1st symbol in the slot is an AGC symbol, and the last symbol is a GP symbol. In FIG. 7, a PSSCH 1 occupies IRBs #0 and IRBs #1, and a corresponding PSCCH 1 occupies IRBs #0. A PSSCH 2 occupies IRBs #2, and a corresponding PSCCH 2 also occupies IRBs #2. It should be noted that, for simplicity, resources occupied by second-stage SCI and resources occupied by a PSCCH DMRS and a PSSCH DMRS are not shown in FIG. 7.

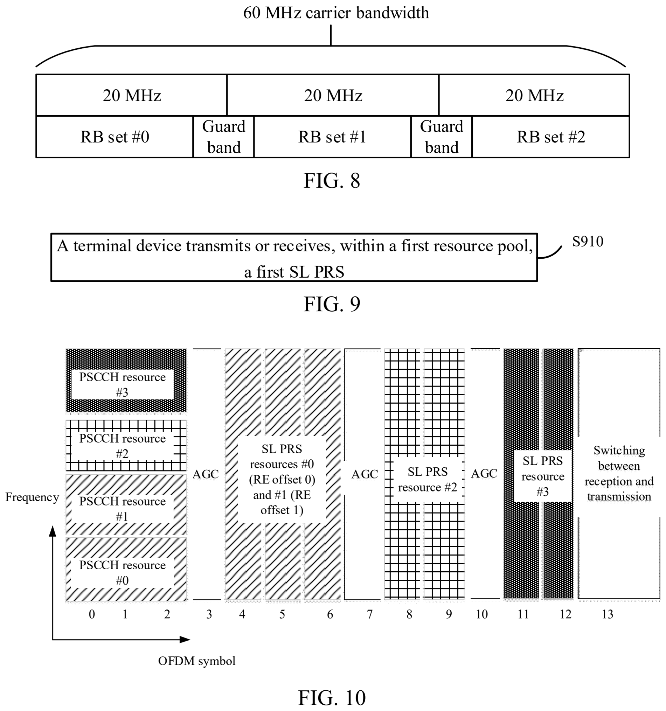

In unlicensed spectrum, the UE may perform listen before talk (listen before talk, LBT) before accessing a channel. LBT is performed at a granularity of 20 MHz in frequency domain, and each 20 MHz may be referred to as an RB set (RB Set). One carrier may include a plurality of RB sets, with a guard period between RB sets, as shown in FIG. 8.

In unlicensed spectrum, a UE is required to perform LBT first, and then access a channel after LBT is successful. However, time at which the UE completes LBT is uncertain. In some implementations, if the UE is restricted to perform transmission only at a starting point of a slot, the UE may miss a transmission occasion because the UE fails to complete LBT before the starting point. Therefore, in SL-U, it is configured to add an additional transmission starting point within a slot, that is, transmission is performed at a plurality of starting points. For example, an additional starting point may be the 3rd or the 4th OFDM symbol in the slot.

**Sidelink-based positioning**

In 3GPP R-17, 3GPP RAN studies sidelink-based positioning, for example, studies "NR positioning enhancement" and "scenarios and requirements of in-coverage, partial coverage, and out-of-coverage NR positioning use cases". The study on "scenarios and requirements of in-coverage, partial coverage, and out-of-coverage NR positioning use cases" focuses on V2X and public safety use cases. In addition, some organizations (for example, the 3GPP SA1 working group) formulates a "ranging-based service" requirement, and formulates a positioning accuracy requirement for use of an IoT in an out-of-coverage scenario. 3GPP is required to study and develop a sidelink-based positioning solution to support use cases, scenarios, and requirements determined in these activities.

To improve positioning accuracy, especially to implement positioning of a UE outside coverage of a cellular network, 3GPP completes feasibility and performance research of a sidelink positioning reference signal-based positioning technology in an earlier stage of R18. Next, a sidelink positioning (including ranging/direction measurement)-based solution in an NR system will be standardized. The sidelink positioning-based solution mainly covers the following aspects of standardization.

Standardization work 1: standardization of sidelink positioning reference signals (sidelink positioning reference signal, SL PRS). The SL PRS may use an interlace-based (without excluding a full RE mapping mode) structure in frequency domain, and uses a sequence format based on a pseudo-random sequence. The SL PRS may be designed based on an existing DL-PRS sequence, and support an SL PRS bandwidth of at most 100 MHz in FR1.

Standardization work 2: standardization of a measurement quantity used for sidelink positioning. For example, the standardization is used to support measurement quantities for SL RTT, SL-AOA, and SL-TDOA positioning methods.

Standardization work 3: standardization of a resource allocation scheme for an SL PRS. For example, a resource allocation scheme for an SL PRS includes a resource allocation scheme 1 and a resource allocation scheme 2, where the scheme 1 corresponds to SL PRS resource allocation performed by a network, and the scheme 2 corresponds to selection of an SL PRS resource performed by a UE independently. In some implementations, the system supports a shared resource pool for both an SL PRS and sidelink communication in Rel-16/17/18, as well as a dedicated resource pool for an SL PRS. In some implementations, for the scheme 2, it is required to study and standardize one or more of the following: resource selection based on channel listening, random resource selection, congestion control, or resource selection based on UE coordination.

Standardization work 4: standardization of an open-loop power control mechanism for SL PRS transmission, and the like.

As mentioned above, an SL PRS may be transmitted within a dedicated resource pool for the SL PRS or in a shared resource pool for the SL PRS and a sidelink data channel (such as a PSSCH). In the shared resource pool or the dedicated resource pool, how to indicate a transmission resource and/or a transmission manner of the SL PRS is a problem to be solved.

The following describes in detail embodiments of this application by using examples.

The embodiments of this application may be applicable to licensed spectrum, or may be applicable to unlicensed spectrum.

The SL PRS resource mentioned in embodiments of this application may refer to a time-frequency resource that is used for transmitting an SL PRS within a slot.

In some embodiments, an SL PRS resource may include one or more of the following features: an identity (identity, ID) of the SL PRS resource, an interlace size and an RE offset of an SL PRS transmitted within the SL PRS resource, a starting OFDM symbol of the SL PRS resource within a slot and a quantity of consecutive OFDM symbols occupied by the SL PRS resource, or RBs occupied by the SL PRS resource within the OFDM symbols.

In some embodiments, SL PRS resources in a resource pool may be determined based on configuration information of a network device.

In some embodiments, SL PRS resources within a resource pool may be determined based on pre-configuration information.

In some embodiments, the configuration information or pre-configuration information from the network device may indicate all of the foregoing features of the SL PRS resource.

In some embodiments, the configuration information or pre-configuration information from the network device may indicate some of the foregoing features of the SL PRS resource. In an example, the configuration information or pre-configuration information from the network device may indicate an ID of the SL PRS resource, an interlace size and an RE offset of an SL PRS transmitted within the SL PRS resource, and a starting OFDM symbol of the SL PRS resource within a slot and a quantity of consecutive OFDM symbols occupied by the SL PRS resource, without explicitly indicating RBs occupied by the SL PRS resource. In this case, RBs occupied by the SL PRS resource may be the same as RBs configured in the resource pool.

FIG. 9 is a schematic flowchart of a sidelink transmission method according to an embodiment of this application. Referring to FIG. 9, in step S910, a terminal device transmits or receives, within a first resource pool, a first SL PRS. The first resource pool may be a dedicated resource pool for an SL PRS, or may be a shared resource pool for both an SL PRS and a sidelink data channel (such as a PSSCH).

**Embodiment 1: The first resource pool is a dedicated resource pool for an SL PRS**

In some embodiments, one or more PSCCH resources may be configured/pre-configured within one slot in the dedicated resource pool for the SL PRS.

In some embodiments, one or more SL PRS resources may be configured/pre-configured within one slot in the dedicated resource pool for the SL PRS.

In some embodiments, SCI carried by a PSCCH transmitted on a PSCCH resource within a slot is used to schedule an SL PRS resource associated with the PSCCH resource within the slot. In other words, the SCI is used to schedule an SL PRS transmitted on an SL PRS resource associated with the PSCCH resource within the slot.

In some embodiments, one slot may include one or more OFDM symbol groups (set of OFDM symbols). One OFDM symbol group may include a plurality of consecutive OFDM symbols within one slot. One OFDM symbol group may include one or more SL PRS resources. For example, one OFDM symbol group may include one SL PRS resource. For another example, one OFDM symbol group includes a plurality of PRS resources located at different positions in frequency domain.

In some embodiments, IDs of SL PRS resources within one slot in the first resource pool may be consecutive.

In some embodiments, IDs of SL PRS resources within one OFDM symbol group may be consecutive.

In some embodiments, there may be a one-to-one mapping relationship between a PSCCH resource and an SL PRS resource in the first resource pool.

In some embodiments, there may be a one-to-many mapping relationship between a PSCCH resource and an SL PRS resource in the first resource pool.

In some embodiments, there may be a many-to-one mapping relationship between a PSCCH resource and an SL PRS resource in the first resource pool.

Embodiment 1.1: There is a one-to-one mapping relationship between a PSCCH resource and an SL PRS resource in the first resource pool.

In some embodiments, a PSCCH resource within one slot in the first resource pool and an SL PRS resource within the slot correspond to one ID, and a PSCCH resource and an SL PRS resource that are associated with each other are associated with a same ID.

In some embodiments, an SL PRS resource to which no PSCCH resource is mapped cannot be used.

In some embodiments, a value range of an ID of a PSCCH resource in the first resource pool is the same as a value range of an ID of an SL PRS resource in the first resource pool.

For example, referring to FIG. 10, four PSCCH resources are configured within one slot, and IDs of the four PSCCH resources are #0 to #3, respectively. Three OFDM symbol groups are further configured within the slot, and the three OFDM symbol groups correspond to OFDM symbols 4 to 6, OFDM symbols 8 to 9, and OFDM symbols 11 to 12, respectively. Two SL PRS resources with different RE offsets are configured within the 1st OFDM symbol group, and one SL PRS resource is configured in each of the other two OFDM symbol groups, that is, there are a total of four SL PRS resources. IDs of the four SL PRS resources are #0 to #3, respectively. In the example shown in FIG. 10, a PSCCH resource #0 is associated with an SL PRS resource #0, a PSCCH resource #1 is associated with an SL PRS resource #1, a PSCCH resource #2 is associated with an SL PRS resource #2, and a PSCCH resource #3 is associated with an SL PRS resource #3.

Embodiment 1.2: One PSCCH resource in the first resource pool is associated with one or more SL PRS resources.

In some embodiments, a PSCCH resource and an SL PRS resource within one slot in the first resource pool may correspond to one ID, and a value range corresponding to an ID of a PSCCH resource within one slot in the first resource pool may be different from a value range corresponding to an ID of an SL PRS resource within the slot.

In some embodiments, a first SL PRS is carried in a first SL PRS resource within a first slot, and the first slot further includes a first PSCCH resource associated with the first SL PRS resource. SCI is carried in the first PSCCH resource, and the SCI is used to schedule the first SL PRS resource (or schedule an SL PRS on the first SL PRS resource).

In some embodiments, the SCI may include a first bit field. The first bit field may be used to indicate the first SL PRS resource. For example, a decimal value represented by the first bit field may represent an ID of an SL PRS resource associated with a PSCCH scheduled by using the SCI.

In some embodiments, a quantity of bits in the first bit field may be associated with a first quantity. The first quantity may be determined based on a quantity of SL PRS resources associated with the first PSCCH resource. For example, the first quantity may be equal to the quantity of SL PRS resources associated with the first PSCCH resource. For example, the quantity of SL PRS resources associated with the first PSCCH resource is D, and indexes of the SL PRS resources are 0, 1, ..., and D-1, respectively.

In some embodiments, a quantity of bits in the first bit field may be determined based on $\lceil log_2 D \rceil$, where $\lceil \cdot \rceil$ denotes a ceiling operation, D indicates that the quantity of SL PRS resources associated with the first PSCCH resource is D, and indexes of the D SL PRS resources may be 0, 1, ..., and D-1, respectively. In an example, the quantity of bits in the first bit field may be equal to $\lceil log_2 D \rceil$.

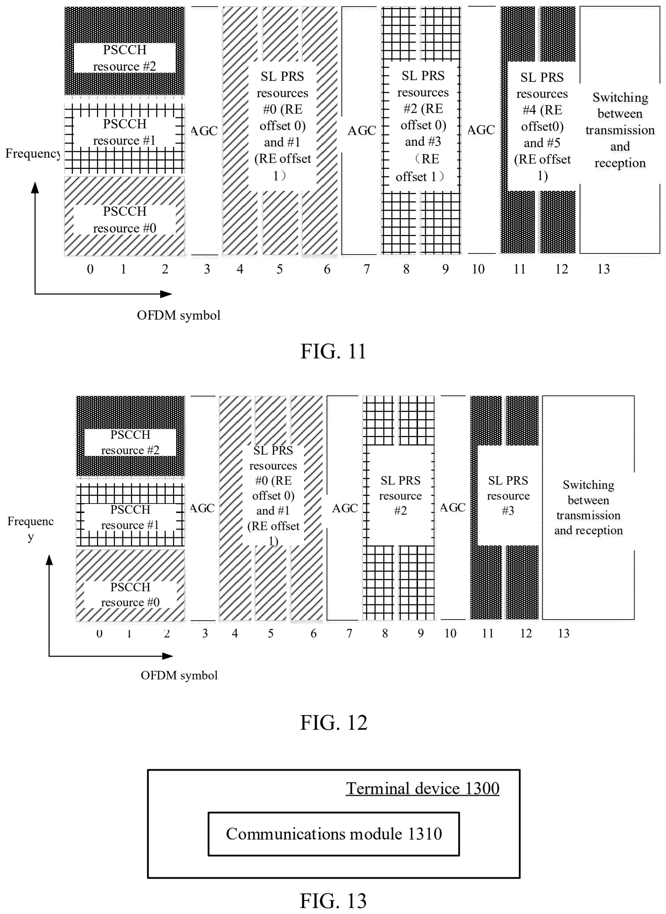

For example, referring to FIG. 11, it is assumed that the first PSCCH resource is the PSCCH resource #0 in FIG. 11. It may be seen from FIG. 11 that the PSCCH resource #0 is associated with two SL PRS resources, that is, the SL PRS resource #0 and the SL PRS resource #1. The quantity of bits in the first bit field in the SCI transmitted on the PSCCH resource #0 may be 1. If a value of the one bit is 0, it indicates that an SL PRS resource indicated by the first bit field is the SL PRS resource #0. If a value of the one bit is 1, it indicates that an SL PRS resource indicated by the first bit field is the SL PRS resource #1.

In some embodiments, IDs of SL PRS resources within a same OFDM symbol group are consecutive (that is, numbered consecutively).

In some embodiments, in a resource selection process (corresponding to the second resource selection mode), the terminal device first selects a target SL PRS resource, and then selects a PSCCH resource associated with the target SL PRS resource.

In some embodiments, in a process in which the terminal device performs resource selection, if one SL PRS resource in a plurality of SL PRS resources associated with a same PSCCH resource is excluded (for example, is excluded because the one SL PRS resource is occupied by another terminal device), the terminal device excludes other SL PRS resources in the plurality of SL PRS resources.

In some embodiments, the terminal device first selects a PSCCH resource. Then, the terminal device may select a target SL PRS resource (used for transmitting an SL PRS) from one or more SL PRS resources associated with the PSCCH resource. In an example, the terminal device may randomly select an SL PRS resource, as a target SL PRS resource, from one or more SL PRS resources associated with the PSCCH resource.

Embodiment 1.2.1: A quantity of PSCCH resources within one slot in the first resource pool is greater than or equal to a quantity of OFDM symbol groups within the slot.

In some embodiments, each SL PRS resource may be uniquely associated with one PSCCH resource. Further, in some embodiments, an ID of a PSCCH resource associated with each SL PRS resource may be indicated by configuration information or pre-configuration information from a network device. To avoid collisions between PSCCHs corresponding to time-division multiplexed SL PRS resources, PSCCH resources associated with SL PRS resources within different OFDM symbols may be different.

In some embodiments, each PSCCH resource is associated with one or more SL PRS resources. For example, the first resource pool may include a first PSCCH resource, and the first PSCCH resource is associated with a plurality of SL PRS resources. In other words, there is a one-to-many association relationship between a PSCCH resource and an SL PRS resource in the first resource pool.

In some embodiments, each PSCCH resource in the first resource pool is associated with one or more SL PRS resources within one OFDM symbol group.

In some embodiments, each PSCCH resource in the first resource pool is associated with one or more SL PRS resources within at most one group of OFDM symbols.

For example, referring to FIG. 12, three PSCCH resources are configured within one slot, and IDs of the three PSCCH resources are #0 to #2, respectively. Three OFDM symbol groups are further configured within the slot, and the three OFDM symbol groups correspond to OFDM symbols 4 to 6, OFDM symbols 8 to 9, and OFDM symbols 11 to 12, respectively. Two SL PRS resources with different RE offsets are configured within the 1st OFDM symbol group, and one SL PRS resource is configured in each of the other two OFDM symbol groups, that is, there are a total of four SL PRS resources. IDs of the four SL PRS resources are #0 to #3, respectively. In the example shown in FIG. 12, a PSCCH resource #0 is associated with an SL PRS resource #0 and an SL PRS resource #1, a PSCCH resource #1 is associated with an SL PRS resource #2, and a PSCCH resource #2 is associated with an SL PRS resource #3.

Embodiment 1.2.2: A quantity of PSCCH resources within one slot in the first resource pool is equal to a quantity of OFDM symbol groups within the slot.

In some embodiments, each PSCCH resource within one slot in the first resource pool is associated with one OFDM symbol group within the slot. In other words, each OFDM symbol group may be uniquely associated with one PSCCH resource. Correspondingly, each PSCCH resource may be uniquely associated with one OFDM symbol group.

For example, referring to FIG. 11, three PSCCH resources are configured within one slot, and IDs of the three PSCCH resources are #0 to #2, respectively. Three OFDM symbol groups are further configured within the slot, and the three OFDM symbol groups correspond to OFDM symbols 4 to 6, OFDM symbols 8 to 9, and OFDM symbols 11 to 12, respectively. Two SL PRS resources with different RE offsets are configured in each of the 1st OFDM symbol group, the 2nd OFDM symbol group, and the 3rd OFDM symbol group, that is, there are a total of six SL PRS resources. IDs of the six SL PRS resources are #0 to #5, respectively. In the example shown in FIG. 11, a PSCCH resource #0 is associated with the 1st OFDM symbol group, a PSCCH resource #1 is associated with the 2nd OFDM symbol group, and a PSCCH resource #2 is associated with the 3rd OFDM symbol group.

Embodiment 1.3: The first resource pool includes a second SL PRS resource, and the second SL PRS resource is associated with one or more PSCCH resources.

In some embodiments, in a resource selection process (corresponding to the second resource selection mode), the terminal device may first select the second SL PRS resource, and then select a target PSCCH resource from one or more PSCCH resources associated with the second SL PRS resource. For example, the terminal device may randomly select an SL PRS resource, as the target PSCCH resource, from one or more PSCCH resources associated with the second SL PRS resource.

In some embodiments, if the first resource selection mode (that is, based on a resource selection mode scheduled by the network device) is used, the network device may indicate a scheduled SL PRS resource and one PSCCH resource associated with the SL PRS resource.

With reference to Embodiment 1.1 to Embodiment 1.3, the foregoing describes in detail an association relationship between an SL PRS resource and a PSCCH resource by using examples. SCI carried on a PSCCH transmitted on one PSCCH resource may be used to schedule an SL PRS transmitted on an SL PRS resource that is associated with the PSCCH resource and that is located within a same slot as the PSCCH resource. In addition, in some embodiments, the SCI may further indicate one or more SL PRS resources located within different slots, and the one or more SL PRS resources located within different slots may be used for retransmission of the SL PRS within the slot, that is, the one or more SL PRS resources located within different slots serve as a retransmission resource for the SL PRS within the slot.

It should be understood that an indication manner of a retransmission resource described below may be applied to any embodiment (for example, Embodiment 1.1, Embodiment 1.2, or Embodiment 1.3) in Embodiment 1.

In some embodiments, the first SL PRS may be carried in the first SL PRS resource within the first slot. The first slot may further include a first PSCCH resource associated with the first SL PRS resource. SCI is carried in the first PSCCH resource, and the SCI may be used to schedule the first SL PRS resource. The SCI includes a second bit field, and the second bit field may be used to indicate a third SL PRS resource (the second bit field may indicate one SL PRS resource, or may indicate a plurality of SL PRS resources; and if the second bit field indicates a plurality of SL PRS resources, the third SL PRS resource may be any one of the plurality of SL PRS resources). A slot within which the third SL PRS resource is located is a second slot (a slot other than the first slot), and the third SL PRS resource is a retransmission resource of the first SL PRS (or the third SL PRS resource is used for retransmitting the first SL PRS).

The third SL PRS resource may be indicated in a plurality of manners by the SCI based on the second bit field. Three possible implementations are provided below.

Manner 1:

The third SL PRS resource is associated with a same ID as the first SL PRS resource. That is, a same SL PRS (SL PRSs that are initially transmitted and retransmitted may be considered as a same SL PRS) may occupy SL PRS resources of a same ID within different slots.

In some embodiments, the second bit field may indicate only a slot within which a retransmission resource of the first SL PRS is located. This indication manner may greatly reduce a quantity of bits of the SCI.

Manner 2:

The first SL PRS resource and the third SL PRS resource correspond to a first OFDM symbol group within a slot. For example, the first SL PRS resource and the third SL PRS resource may correspond to resources with different RE offsets within the first OFDM symbol group.

In some embodiments, the second bit field may be used to indicate a second slot (that is, a slot within which the third SL PRS resource is located) and a first offset value (or referred to as an ID offset value). The first offset value may be used to determine an ID of the third SL PRS resource. For example, the first offset value may be an offset value of the ID of the third SL PRS resource relative to a target ID.

The target ID may be an ID of an SL PRS resource within the first OFDM symbol group. For example, the target ID may be a minimum value of IDs of SL PRS resources within the first OFDM symbol group. For another example, the target ID may be a maximum value of IDs of SL PRS resources within the first OFDM symbol group.

In some embodiments, the second bit field may include a third bit field. The third bit field may be used to carry the first offset value mentioned above. To avoid blind detection of a PSCCH, a quantity of bits in the third bit field may be associated with a maximum quantity of SL PRS resources included in one OFDM symbol group within one slot in the first resource pool.

In some embodiments, the quantity of bits in the third bit field may be determined based on

$R \times \lceil log_2 A \rceil$, where $\lceil \cdot \rceil$ denotes a ceiling operation, *A* denotes the maximum quantity of SL PRS resources included in one OFDM symbol group within one slot in the first resource pool, and *R* denotes a quantity of retransmission resources indicated by the SCI (or a quantity of SL PRSs of different slots that are indicated by the SCI). For example, the quantity of bits in the third bit field may be equal to $R \times \lceil log_2 A \rceil$.

For example, in FIG. 10, assuming that the first SL PRS resource is the SL PRS resource #0 in FIG. 10, and the SL PRS resource #0 is located in the 1st OFDM symbol group (including OFDM symbols 4 to 6) among the three OFDM symbol groups, only a resource within the 1st OFDM symbol group, that is, the SL PRS resource #0 or the SL PRS resource #1, can serve as the third SL PRS resource. In addition, in the example shown in FIG. 10, a maximum quantity A of SL PRS resources included in one OFDM symbol group within one slot is 2. If a quantity *R* of SL PRS resources of different slots that are indicated by the SCI is 2, the third bit field includes

$2 \times \lceil log_2 2 \rceil = 2 \ bits$. The 1st bit in the two bits corresponds to an ID offset value of the 1st SL PRS resource that is indicated by the SCI, and the 2nd bit corresponds to an ID offset value of the 2nd SL PRS resource that is indicated by the SCI. For any one of the two bits, if a value of the bit is 0, it indicates that an SL PRS resource ID indicated by the bit is #0. If a value of the bit is 1, it indicates that an SL PRS resource ID indicated by the bit is #1.

In some embodiments, SL PRS resource IDs within a same OFDM symbol group are consecutive.

Compared with Manner 1, the terminal device is allowed to select an SL PRS resource more flexibly in Manner 2. In addition, Manner 2 may reduce, to a certain extent, a quantity of bits for resource indication.

Manner 3:

The third SL PRS resource may be any SL PRS resource within a slot. That is, a same SL PRS may occupy different SL PRS resources for retransmission. For example, a same SL PRS may occupy SL PRS resources within a same OFDM symbol group or different OFDM symbol groups for retransmission.

In some embodiments, the second bit field is used to indicate one or more of the following: a second slot; or an ID of the third SL PRS resource.

In some embodiments, the second bit field may include a fourth bit field. The fourth bit field may be used to carry an ID of a fourth SL PRS resource, and a quantity of bits in the fourth bit field may be associated with a quantity of SL PRS resources within one slot in the first resource pool.

In some embodiments, the quantity of bits in the fourth bit field may be determined based on

$R \times \lceil log_2 C \rceil$, where $\lceil \cdot \rceil$ denotes a ceiling operation, *R* denotes a quantity of retransmission resources indicated by the SCI (or a quantity of SL PRS resources of different slots and that are indicated by the SCI), and C denotes a quantity of SL PRS resources within one slot in the first resource pool. For example, the quantity of bits in the fourth bit field may be equal to $R \times \lceil log_2 C \rceil$. A decimal value corresponding to every $\lceil log_2 C \rceil$ bits in the bit field may represent a value of an ID of an SL PRS resource corresponding to the decimal value.

For example, in FIG. 10, a total of four SL PRS resources are configured/pre-configured within one slot, that is, *C* = 4. The third SL PRS resource mentioned above may be any one of the four SL PRS resources. If the quantity of SL PRS resources of different slots that are indicated by the SCI is 2, the fourth bit field in the SCI includes $2 \times \lceil log_2 2 \rceil = 4 \ bits$. The first two bits in the four bits may correspond to an ID of the 1st SL PRS resource indicated by the SCI, and the last two bits in the four bits correspond to an ID of the 2nd SL PRS resource indicated by the SCI.

In some embodiments, consecutive indexes starting from 0 may be assigned for IDs of SL PRS resources within one slot.

An advantage of Manner 3 is that the terminal device is allowed to select an SL PRS resource from all SL PRS resources, thereby improving quality of a selected SL PRS resource.

**Embodiment 2: The first resource pool is a shared resource pool for an SL PRS and a sidelink data channel (such as a PSSCH)**

In some embodiments, the first SL PRS is located in a first SL PRS resource, and the first SL PRS resource is scheduled or indicated based on second-stage SCI. In other words, in the shared resource pool, a scheduled SL PRS resource and/or a transmission manner of an SL PRS may be indicated by the second-stage SCI.

In some embodiments, the first SL PRS may be located within the first slot, and second-stage SCI of the first slot may indicate an SL PRS resource within another slot (for example, a retransmission resource of the first SL PRS), or may not indicate an SL PRS resource within another slot.

The first SL PRS resource may be indicated by the second-stage SCI in a plurality of manners. The following provides two possible indication manners with reference to Embodiment 2.1 and Embodiment 2.2.

Embodiment 2.1: The second-stage SCI indicates an ID of the first SL PRS resource.

In some embodiments, a terminal device that transmits the first SL PRS and a terminal device that receives the first SL PRS may exchange SL PRS resource configuration information via sidelink positioning protocol (sidelink positioning protocol, SLPP) layer signalling, or determine SL PRS resource configuration information based on configuration/pre-configuration information of a resource pool. The SL PRS resource configuration information may be used to configure the first SL PRS resource. The SL PRS resource configuration information may include, for example, one or more of the following: an ID of the SL PRS resource, an interlace size and an RE offset of an SL PRS transmitted within the SL PRS resource, or a starting OFDM symbol of the SL PRS resource within a slot and a quantity of consecutive OFDM symbols occupied by the SL PRS resource. Through the foregoing configuration, each ID may correspond to (or uniquely correspond to) one SL PRS resource.

In Embodiment 2.1, the second-stage SCI may indicate an ID of a scheduled first SL PRS resource, thereby reducing overheads of indication signalling in the second-stage SCI.

In some embodiments, the bit field that is in the second-stage SCI and that is used to indicate the ID of the first SL PRS resource may include $\lceil log_2(R+1)\rceil$ or $\lceil log_2(R)\rceil$ bits, where $\lceil \cdot \rceil$ denotes a ceiling operation, and R denotes a maximum value of an SL PRS resource configured in the SL PRS resource configuration information. If $\lceil log_2(R+1)\rceil$ bits are used, an additional value is used to indicate that no SL PRS is transmitted. If the terminal device that transmits the first SL PRS and the terminal device that receives the first SL PRS exchange SL PRS resource configuration information by using SLPP layer signalling, a value of R may be defined in a standard. For example, a value of R may be defined as 15 or another value. If the SL PRS resource configuration information is determined based on resource pool configuration/pre-configuration information, a value of R may be determined based on the resource pool configuration/pre-configuration information.

Embodiment 2.2: The second-stage SCI indicates one or more of the following: an OFDM symbol occupied by the first SL PRS resource, an interlace size corresponding to the first SL PRS, or an RE offset corresponding to the first SL PRS.

The OFDM symbol occupied by the first SL PRS resource may be indicated in a plurality of manners. The following provides two possible indication manners.

Manner 1:

The second-stage SCI may include a fifth bit field. The fifth bit field may be used to indicate a quantity N of OFDM symbols occupied by the first SL PRS resource. A quantity of bits in the fifth bit field may be 4, 10, or $\lceil log_2 M\rceil$. M may denote a quantity of consecutive OFDM symbols (for example, an average quantity of OFDM symbols or a maximum quantity of OFDM symbols) within a slot that are available for sidelink transmission, other than OFDM symbols for a PSSCH DMRS, a PSCCH, and a PSFCH, where $M \geq N$.

In some embodiments, the N symbols occupied by the first SL PRS resource may be the last consecutive N OFDM symbols within the slot that are available for sidelink transmission, other than OFDM symbols for a PSSCH DMRS, a PSCCH, and a PSFCH.

Manner 2:

The second-stage SCI includes a sixth bit field. The sixth bit field may be used to indicate a starting point and a quantity of OFDM symbols occupied by the first SL PRS resource. Information carried in the sixth bit field may be referred to as a resource indication value (resource indication value, RIV).

In some embodiments, a quantity of bits in the sixth bit field is determined based on $\lceil log_2(\frac{M(M+1)}{2})\rceil$, where M denotes a quantity of consecutive OFDM symbols (for example, an average quantity of OFDM symbols or a maximum quantity of OFDM symbols) within a slot that are available for sidelink transmission, other than OFDM symbols for a PSSCH DMRS, a PSCCH, and a PSFCH, or M = 10. In an example, the quantity of bits in the sixth bit field is equal to $\lceil log_2(\frac{M(M+1)}{2})\rceil$.

For example, the sixth bit field carries an RIV. The RIV may be expressed as: $RIV = n^{start} + \sum_{i=1}^{M-1}(N+1-i)$, where $n^{start}$ denotes a spacing between the 1st OFDM symbol occupied by the first SL PRS resource and the 1st OFDM symbol among the M OFDM symbols, and N denotes a quantity of OFDM symbols occupied by the scheduled SL PRS resource.

Compared with Embodiment 2.1, Embodiment 2.2 may reduce overheads of indication signalling in SLPP layer signalling.

An ID of a resource mentioned in any of the foregoing embodiments may refer to or be replaced with an ID associated with the resource. For example, an ID of an SL PRS resource may refer to an ID associated with the SL PRS resource. For another example, an ID of a PSCCH resource may refer to an ID associated with the PSCCH resource.

In some of the foregoing embodiments, a retransmission resource of an SL PRS is indicated by SCI, and the retransmission resource may refer to a retransmission resource within a same period. That is, the SCI indicate only retransmission resources within a same period.

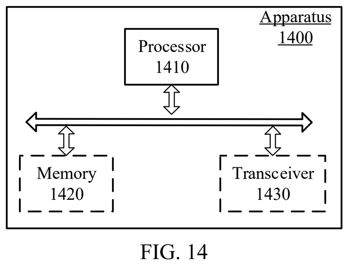

The method embodiments of this application are described above in detail with reference to FIG. 1 to FIG. 12. Apparatus embodiments of this application are described below in detail with reference to FIG. 13 and FIG. 14. It should be understood that the descriptions of the method embodiments correspond to descriptions of the apparatus embodiments, and therefore, for parts that are not described in detail herein, reference may be made to the foregoing method embodiments.

FIG. 13 is a schematic structural diagram of a terminal device according to an embodiment of this application. The terminal device 1300 shown in FIG. 13 includes a communications module 1310. The communications module 1310 is configured to transmit or receive, within a first resource pool, a first sidelink positioning reference signal, where the first resource pool is one of the following: a dedicated resource pool for a sidelink positioning reference signal; or a shared resource pool for a sidelink positioning reference signal and a sidelink data channel.

In some embodiments, the first resource pool is the dedicated resource pool.

In some embodiments, there is a one-to-one mapping relationship between a physical sidelink control channel PSCCH resource and a sidelink positioning reference signal resource in the first resource pool.

In some embodiments, a PSCCH resource and a sidelink positioning reference signal resource within a slot are associated with a same identifier.

In some embodiments, one PSCCH resource in the first resource pool is associated with one or more sidelink positioning reference signal resources in the first resource pool.

In some embodiments, each PSCCH resource in the first resource pool is associated with one or more sidelink positioning reference signal resources within an orthogonal frequency division multiplexing OFDM symbol group in the first resource pool.

In some embodiments, a value range corresponding to an identifier of a PSCCH resource within a slot is different from a value range corresponding to an identifier of a sidelink positioning reference signal resource within the slot.

In some embodiments, each PSCCH resource within one slot is associated with one OFDM symbol group within the slot.

In some embodiments, a quantity of PSCCH resources within one slot is greater than or equal to a quantity of OFDM symbol groups within the slot.

In some embodiments, the first sidelink positioning reference signal is carried in a first sidelink positioning reference signal resource within a first slot; the first slot further includes a first PSCCH resource associated with the first sidelink positioning reference signal resource; sidelink control information SCI is carried in the first PSCCH resource; the SCI includes a first bit field; the first bit field is used to indicate the first sidelink positioning reference signal resource; a quantity of bits in the first bit field is associated with a first quantity; and the first quantity is determined based on a quantity of sidelink positioning reference signal resources associated with the first PSCCH resource.

In some embodiments, the quantity of bits in the first bit field is determined based on $\lceil log_2 D \rceil$, where $\lceil \cdot \rceil$ denotes a ceiling operation, and D denotes the first quantity.

In some embodiments, the terminal device further includes: a first selection module, configured to first select a target sidelink positioning reference signal resource, and then select a PSCCH resource associated with the target sidelink positioning reference signal resource in a resource selection process.

In some embodiments, the first resource pool includes a second sidelink positioning reference signal resource, and the second sidelink positioning reference signal resource is associated with one or more PSCCH resources.

In some embodiments, the terminal device further includes: a second selection module, configured to first select the second sidelink positioning reference signal resource, and then select a target PSCCH resource from one or more PSCCH resources associated with the second sidelink positioning reference signal resource in a resource selection process.

In some embodiments, the target PSCCH resource is randomly selected from one or more PSCCH resources associated with the second sidelink positioning reference signal resource.

In some embodiments, the first sidelink positioning reference signal is carried in a first sidelink positioning reference signal resource within a first slot; the first slot further includes a first PSCCH resource associated with the first sidelink positioning reference signal resource; SCI is carried in the first PSCCH resource, the SCI is used to schedule the first sidelink positioning reference signal resource, and the SCI includes a second bit field; the second bit field is used to indicate a third sidelink positioning reference signal resource; a slot within which the third sidelink positioning reference signal resource is located is a second slot; and the third sidelink positioning reference signal resource serves as a retransmission resource of the first sidelink positioning reference signal.

In some embodiments, the third sidelink positioning reference signal resource and the first sidelink positioning reference signal resource are associated with a same identifier.

In some embodiments, the second bit field is only used to indicate a slot within which a retransmission resource of the first sidelink positioning reference signal is located.

In some embodiments, both the first sidelink positioning reference signal resource and the third sidelink positioning reference signal resource correspond to a first OFDM symbol group within a slot.

In some embodiments, the first sidelink positioning reference signal resource and the third sidelink positioning reference signal resource correspond to different resources within the first OFDM symbol group.

In some embodiments, the second bit field is used to indicate one or more of the following: the second slot; or a first offset value, where the first offset value is used to determine an identifier of the third sidelink positioning reference signal resource.

In some embodiments, the first offset value is an offset value of the identifier of the third sidelink positioning reference signal resource relative to a target identifier, and the target identifier is a minimum identifier of a sidelink positioning reference signal resource within the first OFDM symbol group.

In some embodiments, the second bit field includes a third bit field, the third bit field is used to carry the first offset value, and a quantity of bits in the third bit field is associated with a maximum quantity of sidelink positioning reference signal resources included in one OFDM symbol group within one slot in the first resource pool.

In some embodiments, a quantity of bits in the third bit field is determined based on $R \times \lceil log_2A \rceil$, where $\lceil \cdot \rceil$ denotes a ceiling operation, $A$ denotes the maximum quantity of sidelink positioning reference signal resources included in one OFDM symbol group within one slot in the first resource pool, and $R$ denotes a quantity of retransmission resources indicated by the SCI.

In some embodiments, the third sidelink positioning reference signal resource is any one of sidelink positioning reference signal resources within a slot.

In some embodiments, the second bit field is used to indicate one or more of the following: the second slot; or an identifier of the third sidelink positioning reference signal resource.

In some embodiments, the second bit field includes a fourth bit field, the fourth bit field is used to carry an identifier of the fourth sidelink positioning reference signal resource, and a quantity of bits in the fourth bit field is associated with a quantity of sideline positioning reference signal resources within a slot in the first resource pool.

In some embodiments, the quantity of bits in the fourth bit field is determined based on $R \times \lceil log_2C \rceil$, where $\lceil \cdot \rceil$ denotes a ceiling operation, $R$ denotes a quantity of retransmission resources indicated by the SCI, and $C$ denotes a quantity of sidelink positioning reference signal resources within a slot.

In some embodiments, identifiers of sidelink positioning reference signal resources within one OFDM symbol group are consecutive.

In some embodiments, identifiers of sidelink positioning reference signal resources within one slot are consecutive.

In some embodiments, the first resource pool is the shared resource pool.

In some embodiments, the first sidelink positioning reference signal is carried in the first sidelink positioning reference signal resource, and the first sidelink positioning reference signal resource is scheduled based on second-stage SCI.

In some embodiments, the second-stage SCI indicates an identifier of the first sidelink positioning reference signal resource.

In some embodiments, the second-stage SCI indicates one or more of the following: an OFDM symbol occupied by the first sidelink positioning reference signal resource; an interlace size corresponding to the first sidelink positioning reference signal; or a resource element RE offset corresponding to the first sidelink positioning reference signal.

In some embodiments, the second-stage SCI includes a fifth bit field, the fifth bit field is used to indicate a quantity of OFDM symbols occupied by the first sidelink positioning reference signal resource, a quantity of bits in the fifth bit field is 4, 10, or $\lceil log_2M \rceil$, and M denotes a maximum quantity of consecutive OFDM symbols within a slot that are available for sidelink transmission, other than OFDM symbols for a physical sidelink shared channel demodulation reference signal PSSCH DMRS, a PSCCH, and a physical sidelink feedback channel PSFCH.

In some embodiments, the second-stage SCI includes a sixth bit field, and the sixth bit field is used to indicate a starting point and a quantity of OFDM symbols occupied by the first sidelink positioning reference signal resource.

In some embodiments, a quantity of bits in the sixth bit field is determined based on $\left\lceil log_2(\frac{M(M+1)}{2}) \right\rceil$, where M denotes a maximum quantity of consecutive OFDM symbols within a slot that are available for sidelink transmission, other than OFDM symbols for a PSSCH DMRS, a PSCCH, and a PSFCH, or M = 10.

In some embodiments, the first sidelink positioning reference signal is located within a first slot, and the second-stage SCI indicates or does not indicate a sidelink positioning reference signal resource within another slot.

FIG. 14 is a schematic structural diagram of an apparatus according to an embodiment of this application. The dashed lines in FIG. 14 indicate that the unit or module is optional. The apparatus 1400 may be configured to implement the method described in the foregoing method embodiments. The apparatus 1400 may be a chip, a terminal device, or a network device.

The apparatus 1400 may include one or more processors 1410. The processor 1410 may support the apparatus 1400 in implementing the methods described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program that may be executed by the processor 1410 to cause the processor 1410 to perform the methods described in the foregoing method embodiments. The memory 1420 may be separated from or integrated into the processor 1410.

The apparatus 1400 may further include a transceiver 1430. The processor 1410 may communicate with another device or chip through the transceiver 1430. For example, the processor 1410 may transmit data to and receive data from another device or chip through the transceiver 1430.

An embodiment of this application further provides a computer-readable storage medium, configured to store a program. The computer-readable storage medium may be applied to the terminal device provided in embodiments of this application, and the program causes a computer to perform the methods performed by the terminal device in various embodiments of this application.

An embodiment of this application further provides a computer program product. The computer program product includes a program. The computer program product may be applied to the terminal device provided in embodiments of this application, and the program causes a computer to perform the methods performed by the terminal device in various embodiments of this application.

An embodiment of this application further provides a computer program. The computer program may be applied to the terminal device provided in embodiments of this application, and the computer program causes a computer to perform the methods performed by the terminal device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "preconfigured" may be implemented by prestoring corresponding code or a corresponding table in a device (for example, including a terminal device and a network device) or in other manners that can be used for indicating related information, and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual requirements to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A sidelink transmission method, comprising:

   transmitting or receiving, by a terminal device within a first resource pool, a first sidelink positioning reference signal,
   wherein the first resource pool is one of following:

   a dedicated resource pool for a sidelink positioning reference signal; or
   a shared resource pool for a sidelink positioning reference signal and a sidelink data channel.

2. The method according to claim 1, wherein the first resource pool is the dedicated resource pool.

3. The method according to claim 2, wherein there is a one-to-one mapping relationship between a physical sidelink control channel PSCCH resource and a sidelink positioning reference signal resource in the first resource pool.

4. The method according to claim 3, wherein a PSCCH resource and a sidelink positioning reference signal resource within a slot are associated with a same identifier.

5. The method according to claim 2, wherein one PSCCH resource in the first resource pool is associated with one or more sidelink positioning reference signal resources in the first resource pool.

6. The method according to claim 5, wherein each PSCCH resource in the first resource pool is associated with one or more sidelink positioning reference signal resources within an orthogonal frequency division multiplexing OFDM symbol group in the first resource pool.

7. The method according to claim 5 or 6, wherein a value range corresponding to an identifier of a PSCCH resource within a slot is different from a value range corresponding to an identifier of a sidelink positioning reference signal resource within the slot.

8. The method according to any one of claims 5 to 7, wherein each PSCCH resource within a slot is associated with one OFDM symbol group in the slot.

9. The method according to any one of claims 5 to 8, wherein a quantity of PSCCH resources within a slot is greater than or equal to a quantity of OFDM symbol groups in the slot.

10. The method according to any one of claims 5 to 9, wherein the first sidelink positioning reference signal is carried in a first sidelink positioning reference signal resource within a first slot; the first slot further comprises a first PSCCH resource associated with the first sidelink positioning reference signal resource; sidelink control information SCI is carried in the first PSCCH resource; the SCI comprises a first bit field; the first bit field is used to indicate the first sidelink positioning reference signal resource; a quantity of bits in the first bit field is associated with a first quantity; and the first quantity is determined based on a quantity of sidelink positioning reference signal resources associated with the first PSCCH resource.

11. The method according to claim 10, wherein the quantity of bits in the first bit field is determined based on $\lceil log_2 D \rceil$, wherein $\lceil \cdot \rceil$ denotes a ceiling operation, and D denotes the first quantity.

12. The method according to any one of claims 5 to 11, further comprising:
first selecting, by the terminal device, a target sidelink positioning reference signal resource, and then selecting a PSCCH resource associated with the target sidelink positioning reference signal resource in a resource selection process.

13. The method according to claim 2, wherein the first resource pool comprises a second sidelink positioning reference signal resource, and the second sidelink positioning reference signal resource is associated with one or more PSCCH resources.

14. The method according to claim 13, further comprising:

first selecting, by the terminal device, the second sidelink positioning reference signal resource, and then selecting a target PSCCH resource from one or more PSCCH resources associated with the second sidelink positioning reference signal resource in a resource selection process.

15. The method according to claim 14, wherein the target PSCCH resource is randomly selected from one or more PSCCH resources associated with the second sidelink positioning reference signal resource.

16. The method according to any one of claims 2 to 15, wherein the first sidelink positioning reference signal is carried in a first sidelink positioning reference signal resource within a first slot; the first slot further comprises a first PSCCH resource associated with the first sidelink positioning reference signal resource; SCI is carried in the first PSCCH resource, the SCI is used to schedule the first sidelink positioning reference signal resource, and the SCI comprises a second bit field; the second bit field is used to indicate a third sidelink positioning reference signal resource; a slot within which a third sidelink positioning reference signal resource is located is a second slot; and the third sidelink positioning reference signal resource serves as a retransmission resource of the first sidelink positioning reference signal.

17. The method according to claim 16, wherein the third sidelink positioning reference signal resource and the first sidelink positioning reference signal resource are associated with a same identifier.

18. The method according to claim 17, wherein the second bit field is only used to indicate a slot within which a retransmission resource of the first sidelink positioning reference signal is located.

19. The method according to claim 16, wherein both the first sidelink positioning reference signal resource and the third sidelink positioning reference signal resource correspond to a first OFDM symbol group within a slot.

20. The method according to claim 19, wherein the first sidelink positioning reference signal resource and the third sidelink positioning reference signal resource correspond to different resources within the first OFDM symbol group.

21. The method according to claim 20, wherein the second bit field is used to indicate one or more of following:

the second slot; or

a first offset value, wherein the first offset value is used to determine an identifier of the third sidelink positioning reference signal resource.

22. The method according to claim 21, wherein the first offset value is an offset value of the identifier of the third sidelink positioning reference signal resource relative to a target identifier, and the target identifier is a minimum identifier of a sidelink positioning reference signal resource within the first OFDM symbol group.

23. The method according to claim 21 or 22, wherein the second bit field comprises a third bit field, the third bit field is used to carry the first offset value, and a quantity of bits in the third bit field is associated with a maximum quantity of sidelink positioning reference signal resources comprised in one OFDM symbol group within one slot in the first resource pool.

24. The method according to claim 23, wherein a quantity of bits in the third bit field is determined based on

$R \times \lceil log_2 A \rceil$, wherein $\lceil \cdot \rceil$ denotes a ceiling operation, $A$ denotes the maximum quantity of sidelink positioning reference signal resources comprised in one OFDM symbol group within one slot in the first resource pool, and $R$ denotes a quantity of retransmission resources indicated by the SCI.

25. The method according to claim 16, wherein the third sidelink positioning reference signal resource is any one of sidelink positioning reference signal resources within a slot.

26. The method according to claim 25, wherein the second bit field is used to indicate one or more of following:

> the second slot; or
> an identifier of the third sidelink positioning reference signal resource.

27. The method according to claim 26, wherein the second bit field comprises a fourth bit field, the fourth bit field is used to carry an identifier of a fourth sidelink positioning reference signal resource, and a quantity of bits in the fourth bit field is associated with a quantity of sidelink positioning reference signal resources within a slot in the first resource pool.

28. The method according to claim 27, wherein the quantity of bits in the fourth bit field is determined based on $R \times \lceil log_2 C \rceil$, wherein $\lceil \cdot \rceil$ denotes a ceiling operation, $R$ denotes a quantity of retransmission resources indicated by the SCI, and C denotes a quantity of sidelink positioning reference signal resources within a slot.

29. The method according to any one of claims 2 to 28, wherein identifiers of sidelink positioning reference signal resources within one OFDM symbol group are consecutive.

30. The method according to any one of claims 2 to 29, wherein identifiers of sidelink positioning reference signal resources within one slot are consecutive.

31. The method according to claim 1, wherein the first resource pool is the shared resource pool.

32. The method according to claim 31, wherein the first sidelink positioning reference signal is carried in the first sidelink positioning reference signal resource, and the first sidelink positioning reference signal resource is scheduled based on second-stage SCI.

33. The method according to claim 32, wherein the second-stage SCI indicates an identifier of the first sidelink positioning reference signal resource.

34. The method according to claim 32, wherein the second-stage SCI indicates one or more of following:

> an OFDM symbol occupied by the first sidelink positioning reference signal resource;
> an interlace size corresponding to the first sidelink positioning reference signal; or
> a resource element RE offset corresponding to the first sidelink positioning reference signal.

35. The method according to claim 32 or 34, wherein the second-stage SCI comprises a fifth bit field, the fifth bit field is used to indicate a quantity of OFDM symbols occupied by the first sidelink positioning reference signal resource, a quantity of bits in the fifth bit field is 4, 10, or $\lceil log_2 M \rceil$, and M denotes a maximum quantity of consecutive OFDM symbols within a slot that are available for sidelink transmission other than OFDM symbols for a physical sidelink shared channel demodulation reference signal PSSCH DMRS, a PSCCH, and a physical sidelink feedback channel PSFCH.

36. The method according to claim 32 or 34, wherein the second-stage SCI comprises a sixth bit field, and the sixth bit field is used to indicate a starting point and a quantity of OFDM symbols occupied by the first sidelink positioning reference signal resource.

37. The method according to claim 36, wherein a quantity of bits in the sixth bit field is determined based on

$\lceil log_2(\frac{M(M+1)}{2}) \rceil$, , wherein M denotes a maximum quantity of consecutive OFDM symbols within a slot that are available for sidelink transmission

other than OFDM symbols for a PSSCH DMRS, a PSCCH, and a PSFCH, or M = 10.

**38.** The method according to any one of claims 32 to 37, wherein the first sidelink positioning reference signal is located within a first slot, and the second-stage SCI indicates or does not indicate a sidelink positioning reference signal resource within another slot.

**39.** A terminal device, comprising:

a communications module, configured to transmit or receive, within a first resource pool, a first sidelink positioning reference signal, wherein the first resource pool is one of following:

a dedicated resource pool for a sidelink positioning reference signal; or a shared resource pool for a sidelink positioning reference signal and a sidelink data channel.

**40.** The terminal device according to claim 39, wherein the first resource pool is the dedicated resource pool.

**41.** The terminal device according to claim 40, wherein there is a one-to-one mapping relationship between a physical sidelink control channel PSCCH resource and a sidelink positioning reference signal resource in the first resource pool.

**42.** The terminal device according to claim 41, wherein a PSCCH resource and a sidelink positioning reference signal resource within a slot are associated with a same identifier.

**43.** The terminal device according to claim 40, wherein one PSCCH resource in the first resource pool is associated with one or more sidelink positioning reference signal resources in the first resource pool.

**44.** The terminal device according to claim 43, wherein each PSCCH resource in the first resource pool is associated with one or more sidelink positioning reference signal resources within an orthogonal frequency division multiplexing OFDM symbol group in the first resource pool.

**45.** The terminal device according to claim 43 or 44, wherein a value range corresponding to an identifier of a PSCCH resource within a slot is different from a value range corresponding to an identifier of a sidelink positioning reference signal resource within the slot.

**46.** The terminal device according to any one of claims 43 to 45, wherein each PSCCH resource within a slot is associated with one OFDM symbol group in the slot.

**47.** The terminal device according to any one of claims 43 to 46, wherein a quantity of PSCCH resources within a slot is greater than or equal to a quantity of OFDM symbol groups in the slot.

**48.** The terminal device according to any one of claims 43 to 47, wherein the first sidelink positioning reference signal is carried in a first sidelink positioning reference signal resource within a first slot; the first slot further comprises a first PSCCH resource associated with the first sidelink positioning reference signal resource; sidelink control information SCI is carried in the first PSCCH resource; the SCI comprises a first bit field; the first bit field is used to indicate the first sidelink positioning reference signal resource; a quantity of bits in the first bit field is associated with a first quantity; and the first quantity is determined based on a quantity of sidelink positioning reference signal resources associated with the first PSCCH resource.

**49.** The terminal device according to claim 48, wherein the quantity of bits in the first bit field is determined based on $\lceil log_2 D \rceil$, wherein $\lceil \cdot \rceil$ denotes a ceiling operation, and D denotes the first quantity.

**50.** The terminal device according to any one of claims 43 to 49, wherein the terminal device further comprises:
a first selection module, configured to first select a target sidelink positioning reference signal resource, and then select a PSCCH resource associated with the target sidelink positioning reference signal resource in a resource selection process.

**51.** The terminal device according to claim 40, wherein the first resource pool comprises a second sidelink positioning reference signal resource, and the second sidelink positioning reference signal resource is associated with one or more PSCCH resources.

**52.** The terminal device according to claim 51, further comprising:
a second selection module, configured to first select the second sidelink positioning reference signal resource, and then select a target PSCCH resource from one or more PSCCH resources associated with the second sidelink positioning reference signal resource in a resource selection process.

**53.** The terminal device according to claim 52, wherein the target PSCCH resource is randomly selected from one or more PSCCH resources associated with the second sidelink positioning reference signal resource.

54. The terminal device according to any one of claims 40 to 53, wherein the first sidelink positioning reference signal is carried in a first sidelink positioning reference signal resource within a first slot; the first slot further comprises a first PSCCH resource associated with the first sidelink positioning reference signal resource; SCI is carried in the first PSCCH resource, the SCI is used to schedule the first sidelink positioning reference signal resource, and the SCI comprises a second bit field; the second bit field is used to indicate a third sidelink positioning reference signal resource; a slot within which the third sidelink positioning reference signal resource is located is a second slot; and the third sidelink positioning reference signal resource serves as a retransmission resource of the first sidelink positioning reference signal.

55. The terminal device according to claim 54, wherein the third sidelink positioning reference signal resource and the first sidelink positioning reference signal resource are associated with a same identifier.

56. The terminal device according to claim 55, wherein the second bit field is only used to indicate a slot within which a retransmission resource of the first sidelink positioning reference signal is located.

57. The terminal device according to claim 54, wherein both the first sidelink positioning reference signal resource and the third sidelink positioning reference signal resource correspond to a first OFDM symbol group within a slot.

58. The terminal device according to claim 57, wherein the first sidelink positioning reference signal resource and the third sidelink positioning reference signal resource correspond to different resources within the first OFDM symbol group.

59. The terminal device according to claim 58, wherein the second bit field is used to indicate one or more of following:

> the second slot; or
> a first offset value, wherein the first offset value is used to determine an identifier of the third sidelink positioning reference signal resource.

60. The terminal device according to claim 59, wherein the first offset value is an offset value of the identifier of the third sidelink positioning reference signal resource relative to a target identifier, and the target identifier is a minimum identifier of a sidelink positioning reference signal resource within the first OFDM symbol group.

61. The terminal device according to claim 59 or 60, wherein the second bit field comprises a third bit field, the third bit field is used to carry the first offset value, and a quantity of bits in the third bit field is associated with a maximum quantity of sidelink positioning reference signal resources comprised in one OFDM symbol group within one slot in the first resource pool.

62. The terminal device according to claim 61, wherein a quantity of bits in the third bit field is determined based on $R \times \lceil log_2 A \rceil$, wherein $\lceil \cdot \rceil$ denotes a ceiling operation, *A* denotes the maximum quantity of sidelink positioning reference signal resources comprised in one OFDM symbol group within one slot in the first resource pool, and *R* denotes a quantity of retransmission resources indicated by the SCI.

63. The terminal device according to claim 62, wherein the third sidelink positioning reference signal resource is any one of sidelink positioning reference signal resources within a slot.

64. The terminal device according to claim 63, wherein the second bit field is used to indicate one or more of following:

> the second slot; or
> an identifier of the third sidelink positioning reference signal resource.

65. The terminal device according to claim 64, wherein the second bit field comprises a fourth bit field, the fourth bit field is used to carry an identifier of a fourth sidelink positioning reference signal resource, and a quantity of bits in the fourth bit field is associated with a quantity of sidelink positioning reference signal resources within a slot in the first resource pool.

66. The terminal device according to claim 65, wherein the quantity of bits in the fourth bit field is determined based on $R \times \lceil log_2 C \rceil$, wherein $\lceil \cdot \rceil$ denotes a ceiling operation, *R* denotes a quantity of retransmission resources indicated by the SCI, and *C* denotes a quantity of sidelink positioning reference signal resources within a slot.

67. The terminal device according to any one of claims 40 to 66, wherein identifiers of sidelink positioning reference signal resources within one OFDM symbol group are consecutive.

68. The terminal device according to any one of claims 40 to 67, wherein identifiers of sidelink positioning reference signal resources within one slot are consecutive.

**69.** The terminal device according to claim 39, wherein the first resource pool is the shared resource pool.

**70.** The terminal device according to claim 69, wherein the first sidelink positioning reference signal is carried in the first sidelink positioning reference signal resource, and the first sidelink positioning reference signal resource is scheduled based on second-stage SCI.

**71.** The terminal device according to claim 70, wherein the second-stage SCI indicates an identifier of the first sidelink positioning reference signal resource.

**72.** The terminal device according to claim 70, wherein the second-stage SCI indicates one or more of following:

an OFDM symbol occupied by the first sidelink positioning reference signal resource;
an interlace size corresponding to the first sidelink positioning reference signal; or
a resource element RE offset corresponding to the first sidelink positioning reference signal.

**73.** The terminal device according to claim 70 or 72, wherein the second-stage SCI comprises a fifth bit field, the fifth bit field is used to indicate a quantity of OFDM symbols occupied by the first sidelink positioning reference signal resource, a quantity of bits in the fifth bit field is 4, 10, or $\lceil log_2 M \rceil$, and M denotes a maximum quantity of consecutive OFDM symbols within a slot that are available for sidelink transmission other than OFDM symbols for a physical sidelink shared channel demodulation reference signal PSSCH DMRS, a PSCCH, and a physical sidelink feedback channel PSFCH.

**74.** The terminal device according to claim 70 or 72, wherein the second-stage SCI comprises a sixth bit field, and the sixth bit field is used to indicate a starting point and a quantity of OFDM symbols occupied by the first sidelink positioning reference signal resource.

**75.** The terminal device according to claim 74, wherein a quantity of bits in the sixth bit field is determined based on $\left\lceil \log_2 \left( \frac{M(M+1)}{2} \right) \right\rceil$, wherein M denotes a maximum quantity of consecutive OFDM symbols within a slot that are available for sidelink transmission other than OFDM symbols for a PSSCH DMRS, a PSCCH, and a PSFCH, or M = 10.

**76.** The terminal device according to any one of claims 70 to 75, wherein the first sidelink positioning reference signal is located within a first slot, and the second-stage SCI indicates or does not indicate a sidelink positioning reference signal resource within another slot.

**77.** A terminal device, comprising a transceiver, a memory, and a processor, wherein the memory is configured to store a program, and the processor is configured to invoke the program in the memory and control the transceiver to receive or transmit a signal, to cause the terminal device to execute the method according to any one of claims 1 to 38.

**78.** An apparatus, comprising a processor configured to invoke a program from a memory, to cause the apparatus to execute the method according to any one of claims 1 to 38.

**79.** A chip, comprising a processor, configured to invoke a program from a memory to cause a device installed with the chip to execute the method according to any one of claims 1 to 38.

**80.** A computer-readable storage medium, wherein the computer-readable storage medium stores a program, and the program causes a computer to execute the method according to any one of claims 1 to 38.

**81.** A computer program product, comprising a program that causes a computer to execute the method according to any one of claims 1 to 38.

**82.** A computer program, wherein the computer program causes a computer to execute the method according to any one of claims 1 to 38.

**100**

110

120

FIG. 1

PSCCH frequency
domain resource
indicator

PSCCH

PSSCH

Quantity of
sub-channels
=3

Sub-channel
size

PSCCH

PSSCH

PSCCH

PSSCH

f

t

Sub-channel start
RB index

FIG. 2

Slot 0

Slot 1

Downlink symbol    Flexible symbol    Uplink symbol

FIG. 3

Resources excluded

$n-T_{proc,0}$

E(v,m)

$n-T_0$       $a$       $n$   $n+T_1$       $n+T_2$   $t$

Slot not listened      ☐ Listening window    ▩ Selection window

## FIG. 4

▨ indicates a resource used for transmitting a DL PRS

RE#11
RE#10
RE#9
RE#8
RE#7
RE#6
RE#5
RE#4
RE#3
RE#2
RE#1
RE#0

Interlace size = 2, RE offset = 0

RE#11
RE#10
RE#9
RE#8
RE#7
RE#6
RE#5
RE#4
RE#3
RE#2
RE#1
RE#0

Interlace size = 2, RE offset = 1

## FIG. 5

$f$（RB）

Interlaced resource block 0   Interlaced resource block 1

FIG. 6

$f$ (RB)

$t$ (OFDM symbol)

AGC   PSCCH 1   PSSCH 1   PSCCH 2   PSSCH 2   GP

FIG. 7

60 MHz carrier bandwidth

| 20 MHz | | 20 MHz | | 20 MHz |
|---|---|---|---|---|
| RB set #0 | Guard band | RB set #1 | Guard band | RB set #2 |

FIG. 8

A terminal device transmits or receives, within a first resource pool, a first SL PRS — S910

FIG. 9

FIG. 10

**FIG. 11**

**FIG. 12**

**FIG. 13**

Apparatus
1400

Processor
1410

Memory
1420

Transceiver
1430

FIG. 14

## INTERNATIONAL SEARCH REPORT

| International application No. |
| --- |
| **PCT/CN2023/112197** |

**A.    CLASSIFICATION OF SUBJECT MATTER**

H04W72/0446(2023.01)i

According to International Patent Classification (IPC) or to both national classification and IPC

**B.    FIELDS SEARCHED**

Minimum documentation searched (classification system followed by classification symbols)

IPC: H04W, H04L, H04Q

Documentation searched other than minimum documentation to the extent that such documents are included in the fields searched

Electronic data base consulted during the international search (name of data base and, where practicable, search terms used)

CNABS, CNTXT, ENTXTC, WPABSC, 3GPP: 侧行, 侧链路, 旁链路, 定位, 参考信号, 资源池, 资源, 共享, 专用, PSCCH, sidelink, positioning, reference w signal, resource, pool, shared, dedicated

**C.    DOCUMENTS CONSIDERED TO BE RELEVANT**

| Category* | Citation of document, with indication, where appropriate, of the relevant passages | Relevant to claim No. |
| --- | --- | --- |
| X | US 2023199802 A1 (LENOVO (SINGAPORE) PTE. LTD.) 22 June 2023 (2023-06-22) description, paragraphs [0023]-[0193], and figures 1-14 | 1-4, 39-42, 77-82 |
| A | CN 116366216 A (VIVO COMMUNICATION TECHNOLOGY CO., LTD.) 30 June 2023 (2023-06-30) entire document | 1-82 |
| A | CN 115706627 A (CITIC KEZHILIAN TECHNOLOGY CO., LTD.) 17 February 2023 (2023-02-17) entire document | 1-82 |
| A | WO 2021240479 A1 (LENOVO (SINGAPORE) PTE. LTD.) 02 December 2021 (2021-12-02) entire document | 1-82 |

| ☐ Further documents are listed in the continuation of Box C. | ✓ See patent family annex. |
| --- | --- |

|   |   |   |   |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 April 2024** | **10 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/112197**

| Patent document cited in search report | | | Publication date (day/month/year) | Patent family member(s) | | | Publication date (day/month/year) |
|---|---|---|---|---|---|---|---|
| US | 2023199802 | A1 | 22 June 2023 | EP | 4158829 | A1 | 05 April 2023 |
| | | | | BR | 112022024306 | A2 | 27 December 2022 |
| | | | | WO | 2021240479 | A1 | 02 December 2021 |
| | | | | WO | 2021240478 | A1 | 02 December 2021 |
| | | | | EP | 4158828 | A1 | 05 April 2023 |
| | | | | KR | 20230019102 | A | 07 February 2023 |
| | | | | US | 2023224121 | A1 | 13 July 2023 |
| CN | 116366216 | A | 30 June 2023 | None | | | |
| CN | 115706627 | A | 17 February 2023 | None | | | |
| WO | 2021240479 | A1 | 02 December 2021 | EP | 4158829 | A1 | 05 April 2023 |
| | | | | BR | 112022024306 | A2 | 27 December 2022 |
| | | | | WO | 2021240478 | A1 | 02 December 2021 |
| | | | | EP | 4158828 | A1 | 05 April 2023 |
| | | | | KR | 20230019102 | A | 07 February 2023 |
| | | | | US | 2023224121 | A1 | 13 July 2023 |
| | | | | US | 2023199802 | A1 | 22 June 2023 |

Form PCT/ISA/210 (patent family annex) (July 2022)